# EUROPÄISCHE PATENTSCHRIFT

(11) **EP 3 659 929 B1**
(45) Veröffentlichungstag und Bekanntmachung des Hinweises auf die Patenterteilung: **15.12.2021**
(21) Anmeldenummer: 19210095.6
(22) Anmeldetag: 19.11.2019
(51) Int. Cl.: B64F 3/00, B64C 39/02

(54) **SYSTEM ZUR UNTERSTÜTZUNG EINES START- UND/ODER LANDEVORGANGS, LUFTFAHRZEUG UND VERFAHREN HIERZU**
SYSTEM FOR ASSISTING A STARTING AND / OR LANDING PROCEDURE, AIRCRAFT AND METHOD THEREFOR
SYSTÈME DE SUPPORT D'UN PROCESSUS DE DÉMARRAGE ET/OU D'ATTERRISSAGE, AÉRONEF ET PROCÉDÉ ASSOCIÉ

(30) Priorität: 29.11.2018 DE 102018130354
(43) Veröffentlichungstag der Anmeldung: 03.06.2020
(73) Patentinhaber: Deutsches Zentrum für Luft- und Raumfahrt e.V., 51147 Köln (DE)
(72) Erfinder: Binger, Jan, 15712 Königs Wusterhausen (DE); Donkels, Alexander, 38110 Braunschweig (DE)
(74) Vertreter: Gramm, Lins & Partner Patent- und Rechtsanwälte PartGmbB

(56) Entgegenhaltungen:
- EP-A1- 3 310 656
- US-A1- 2016 082 460
- US-B2- 9 800 091
- US-B2- 10 007 272

## Beschreibung

Die Erfindung betrifft ein System zur Unterstützung eines Landevorgangs eines vertikallandefähigen Luftfahrzeugs auf einer Landefläche. Das System weist ein Halteseil und eine durch einen Windenmotor angetriebene Seilwinde auf, die zum Aufrollen und Abrollen des Halteseils eingerichtet ist. Das System weist außerdem eine zum Steuern der Seilwinde eingerichtete Steuereinrichtung und eine Befestigungseinrichtung auf, mit der die Seilwinde über das Halteseil verbunden ist und die an dem Luftfahrzeug befestigt werden kann, um die Seilwinde über das Halteseil mit dem Luftfahrzeug zu verbinden.

Die Erfindung betrifft außerdem ein vertikallandefähiges Luftfahrzeug mit einem solchen System.

Die Erfindung betrifft des Weiteren ein Verfahren zur Unterstützung eines Landevorgangs eines vertikalen Luftfahrzeugs auf einer Landefläche sowie ein Verfahren zur Unterstützung eines Startvorgangs eines vertikallandefähigen Luftfahrzeugs auf einer Landefläche.

Der Begriff Unmanned Aerial Vehicle (UAV) wird im Rahmen dieser Anmeldung Synonym zu dem Begriff unbemanntes Luftfahrzeug verwendet.

Unter einer Seilkraft im Sinne der vorliegenden Anmeldung wird eine über das Halteseil übertragene Zugkraft verstanden.

Unter einer Komponente, die an der Seilwinde angeordnet ist, wird im Sinne der vorliegenden Anmeldung eine Komponente verstanden, die mit der Seilwinde direkt oder indirekt verbunden und/oder in die Seilwinde integriert ist und dazu eingerichtet ist, mit der Seilwinde von dem Luftfahrzeug auf die Landefläche abgelassen zu werden.

Unter einer Flughöhe wird im Sinne der vorliegenden Anmeldung ein vertikaler Abstand zur Landefläche verstanden.

Unter einer Regelung im Sinne der vorliegenden Anmeldung wird eine Regelung verstanden, bei der zumindest eine zu regelnde Größe anhand von Sensordaten, die von einem oder mehreren Sensoren erzeugt worden sind, in Bezug auf einen Soll-Wert derart geregelt wird, dass die Regelabweichung zwischen dem Ist-Wert der zur regelnden Größe und dem Soll-Wert der zu regelnden Größe reduziert wird oder minimiert wird oder im Idealfall auf Null reduziert wird.

In bestimmten Situationen kann das Landen eines vertikallandefähigen Luftfahrzeugs auf einer Landefläche ebenso wie das Starten eines solchen Luftfahrzeugs auf der Landefläche mit besonderen Schwierigkeiten verbunden sein. Dies ist bspw. dann der Fall, wenn sich die Landefläche auf einem Hochhaus befindet und starker und/oder böiger Wind vorhanden ist. Eine weitere schwierige Lande- bzw. Startsituation kann auftreten, wenn das Luftfahrzeug auf einer auf See befindlichen Landefläche landen soll, z. B. auf der Landefläche eines auf See befindlichen Schiffs oder einer auf See befindlichen Bohrplattform oder allgemein eines auf See befindlichen Schwimmkörpers. Die Landung kann hierbei insbesondere durch starken Seegang sowie durch starken und/oder böigen Wind erschwert werden.

Von großer Bedeutung ist diese Problematik beispielsweise für die Seestreitkräfte und staatlichen Exekutivorgane (z. B. Polizei, Grenzschutz) vieler Länder, die heute mit modernen und vielseitig einsetzbaren Schiffen ausgestattet sind. Hauptaufgabe dieser Schiffe ist meist die Überwachung großer See- und Gewässerabschnitte und das Kontrollieren, Bergen, Retten und/oder Bekämpfen der darin befindlichen Seefahrzeuge. Der Aktionsradius der Schiffe reicht dabei oft nicht aus, um den jeweiligen See- oder Gewässerabschnitt angemessen zu kontrollieren. Dies gilt selbst dann, wenn zur Erweiterung des Wahrnehmungsbereichs des Schiffs moderne Sensorik eingesetzt wird.

Durch den Einsatz fliegender Systeme kann der Aktionsradius eines Schiffes allerdings entscheidend erweitert werden. Zu diesem Zweck führen Schiffe häufig ein oder mehrere Hubschrauber und/oder sonstige vertikallandefähige Luftfahrzeuge mit sich, die von einer Landefläche, die sich meist auf dem Achterdeck des Schiffes befindet, starten und landen können. Eine solche Landefläche kann z. B. ein Landedeck oder allgemein ein Teil eines Schiffsdecks sein. Die Landefläche erfährt dabei alle Bewegungen des Schiffs, d. h. sie bewegt sich mit der Geschwindigkeit des Schiffs durch das Wasser und ist in Abhängigkeit des Seegangs dem Rollen, Stampfen und Gieren des Schiffes ausgesetzt. Besonders problematisch können dabei Vertikalbewegungen der Landefläche sein, die hauptsächlich durch das Stampfen des Schiffs hervorgerufen werden und deren Amplitude mit zunehmender Schiffslänge wächst.

Derartige Bewegungen der Landefläche sind für das landende oder startende vertikallandefähige Luftfahrzeug, z. B. einen startenden oder landenden Hubschrauber, sehr gefährlich. Bspw. kann eine rasche Aufwärtsbewegung des Landedecks kurz vor dem Aufsetzen zu einem heftigen Aufprall des Hubschraubers führen und diesen beschädigen oder sogar außer Kontrolle geraten lassen. Gleiches ist möglich, wenn sich die Landefläche in einer stark ausgeprägten Schräglage befindet, weil durch eine solche Schräglage das Luftfahrzeug beim Aufsetzen umkippen oder mit einem Rotor das Landedeck berühren oder sogar nach erfolgreicher Landung vom Deck rutschen könnte.

Die komplexe Bewegung der Landefläche macht den Landevorgang ebenso wie den Startvorgang für den Piloten des Luftfahrzeugs sehr anspruchsvoll. Zusätzlich zu einer Anpassung des Start- bzw. Landevorgangs an die Bewegung der Landefläche müssen vorhandener Wind und von den Decksaufbauten erzeugte Verwirbelungen der Luft ausgeglichen werden. Bei besonders schlechten Witterungsverhältnissen kann der Start- und/oder Landevorgang des Luftfahrzeugs aus diesen Gründen nahezu unmöglich werden. Erschwerend kommt hinzu, dass dem Piloten in der Regel durch Instrumente und Bediengeräte die Sicht nach unten erschwert wird, sodass er die Bewegungen der Landefläche und die relative Position des Luftfahrzeugs zur Landefläche nur schwer einschätzen kann.

Besondere Herausforderungen ergeben sich in diesem Zusammenhang aus dem Bestreben, bemannte vertikallandefähige Luftfahrzeuge (z. B. bemannte Hubschrauber) durch unbemannte vertikallandefähige Luftfahrzeuge (UAVs, z. B. unbemannte Hubschrauber) zu ersetzen. Diese Herausforderungen liegen insbesondere darin begründet, dass bei einem Einsatz eines unbemannten Luftfahrzeugs nicht auf die Erfahrungen, Fähigkeiten und Fertigkeiten eines an Bord des Luftfahrzeugs befindlichen Piloten zurückgegriffen werden kann.

Aus dem Stand der Technik sind für bemannte Hubschrauber beispielsweise das sogenannte Recovery Assist, Secure and Traverse System (RAST) des Herstellers Curtiss-Wright Defense Solutions und ähnliche Systeme zur Unterstützung des Landevorgangs bekannt. Derartige Systeme werden z. B. in den US-Patentschriften 3,303,807 und 4,319,722 beschrieben. Bei diesen Systemen wird eine Verbindung zwischen dem Hubschrauber und dem Schiff über ein Stahlseil hergestellt und das Stahlseil wird von einer in ein Landedeck des Schiffs integrierten Seilwinde langsam eingeholt. Die Seilverbindung zwischen Hubschrauber und Seilwinde wird dabei hergestellt, in dem der Hubschrauber aus einer Schwebeposition über dem Landedeck ein dünnes Pilotseil herablässt. Eine oder mehrere Personen auf dem Landedeck verbinden das Pilotseil mit einem stärkeren Windenseil, welches dann vom Hubschrauber heraufgezogen und mit dem Hubschrauber verbunden wird. Durch das Einholen des Windenseils wird der Hubschrauber allmählich auf das Deck gezogen und nach der Landung gesichert.

Die zuvor erläuterten Systeme, insbesondere das RAST-System, haben sich in der Praxis zur Unterstützung des Landevorgangs von bemannten Hubschraubern auf Schiffen bewährt. Ein wesentlicher Nachteil dieser Systeme liegt allerdings darin, dass eine aufwändige und teure Infrastruktur an Bord des Schiffs erforderlich ist. Darüber hinaus kann die auf dem Schiff installierte Infrastruktur aufgrund von Kompatibilitätsproblemen nicht ohne weiteres für Luftfahrzeuge unterschiedlicher Art und Bauform eingesetzt werden. Bspw. müssen die Stärke des Windenseils und die Leistung der Winde auf das jeweilige Luftfahrzeug sowie dessen Maße und Auftriebsleistung abgestimmt werden. Andernfalls könnte z. B. ein zu schweres Windenseil oder eine hinsichtlich ihrer Leistung überdimensionierte Winde zu einer Überlastung des Luftfahrzeugs während des Start- und/oder Landevorgangs bis hin zu einem Kontrollverlust führen. In besonderem Maße gilt dies für unbemannte Luftfahrzeuge, da diese in einem besonders großen Spektrum verschiedener Größen- und Gewichtsklassen verfügbar sind. Im Ergebnis führt dies dazu, dass das zuvor beschriebene RAST-System und ähnliche Systeme, die auf einer an Bord des Schiffs installierten Seilwinde basieren, nur von Luftfahrzeugen eines bestimmten Typs oder einer bestimmten Art genutzt werden können.

Aus der US 10 007 272 B2 sind ein System und ein zugehöriges Verfahren zur Unterstützung des Landevorgangs eines unbemannten Luftfahrzeugs bekannt. Vorgesehen ist dabei, dass das Luftfahrzeug eine Seilwinde, ein Halteseil und eine Kopplungsvorrichtung mitführt. Um den Landevorgang des Luftfahrzeug auf einer Landeplattform zu unterstützen, können das Halteseil und die am Ende des Halteseils befestigte Kopplungsvorrichtung mittels der Seilwinde abgelassen werden und die abgelassene Kopplungsvorrichtung kann mit der Landeplattform verbunden werden. Die Seilwinde verbleibt dabei stets am Luftfahrzeug.

Des Weiteren ist aus der US 2016/082460 ein unbemanntes Luftfahrzeug bekannt, das zum Aufbringen von Farbe auf eine Oberfläche eingerichtet ist. Das Luftfahrzeug ist zu diesem Zweck während des Flugs über einen flexiblen Schlauch mit einem am Boden angeordneten Farbbehälter verbunden. Alternativ kann der Farbbehälter auch von dem Luftfahrzeug mitgeführt werden und das Luftfahrzeug aus Sicherheitsgründen über ein Kabel oder ein Seil mit dem Boden verbunden sein.

Außerdem ist aus der EP 3 310 656 A1 ein System bekannt, das dazu dient, das potentielle Absturzgebiet eins Luftfahrzeugs im Falle einer Fehlfunktion zu begrenzen. Zu diesem Zweck ist vorgesehen, dass das Luftfahrzeug über einen Draht mit einer am Boden angeordneten Seilwinde verbunden ist, welche die Länge des Drahts reguliert.

Darüber sind aus der US 9 800 091 B2 ein System und ein zugehöriges Verfahren bekannt, die zur Energieversorgung eines Flugobjekts während des Flugs dienen. Das Flugobjekt ist zu diesem Zweck über eine optische Übertragungsleitung mit einer am Boden angeordneten Energiequelle verbunden. Das System kann darüber hinaus eine Seiltrommel oder Spule zum Auf- und Abwickeln der Übertragungsleitung aufweisen, die am Boden oder an dem Flugobjekt angeordnet sein kann.

Ausgehend hiervon ist es Aufgabe der vorliegenden Erfindung, eine Möglichkeit zur Unterstützung eines Landevorgangs und/oder eines Startvorgangs für vertikallandefähige Luftfahrzeuge bereitzustellen, die mit geringem Installationsaufwand auskommt, flexibel einsetzbar ist und ein sicheres Landen bzw. Starten des Luftfahrzeugs auf einer Landefläche auch unter schwierigen Bedingungen ermöglicht.

Diese Aufgabe wird erfindungsgemäß gelöst durch ein System mit den Merkmalen des Anspruchs 1.

Es wird somit vorgeschlagen, dass ein System der eingangs genannten Art eine an der Seilwinde angeordnete Kopplungseinrichtung aufweist und dazu ausgebildet ist, von dem Luftfahrzeug mitgeführt zu werden, wobei
- die Steuereinrichtung dazu eingerichtet ist, die Seilwinde so zu steuern, dass zu Beginn des Landevorgangs durch Abrollen des Halteseils die Seilwinde von dem Luftfahrzeug auf die Landefläche abgelassen wird,
- die Kopplungseinrichtung dazu eingerichtet ist, durch Herstellen einer lösbaren Verbindung zwischen der abgelassenen Seilwinde und der Landefläche einen angekoppelten Zustand des Luftfahrzeugs herzustellen, in welchem das Luftfahrzeug über das Halteseil mit der Landefläche verbunden ist, und
- die Steuereinrichtung dazu eingerichtet ist, die Seilwinde so zu steuern, dass während des Landevorgangs durch Aufrollen des Halteseils in dem angekoppelten Zustand des Luftfahrzeugs eine ununterbrochene Seilkraft auf das Luftfahrzeug ausgeübt wird.

Das Halteseil kann dabei bspw. ein Metall- oder Drahtseil sein, insbesondere ein Stahlseil. Das Halteseil kann bspw. auch ein Naturfaser-Seil oder ein Kunstfaser-Seil oder ein aus verschiedenen Materialien der zuvor genannten Art hergestelltes Seil sein. Ein Halteseil im Sinne der vorliegenden Anmeldung kann grundsätzlich aber auch jedes längliche, biegeschlaffe Kopplungselement sein, das dazu geeignet ist, eine Zugkraft auf das Luftfahrzeug auszuüben und auf der Seilwinde auf- und abgerollt zu werden. Das Halteseil kann demnach bspw. auch als Kette oder als sonstige seilähnliche Struktur ausgebildet sein.

Der Windenmotor kann insbesondere als Elektromotor ausgebildet sein.

Die Erfindung bietet den Vorteil, dass das Luftfahrzeug mittels des Halteseils zuverlässig zur Landefläche geführt werden kann. Das Halteseil begrenzt dabei die Freiheitsgerade des Luftfahrzeugs zunehmend, wenn sich das Luftfahrzeug der Landefläche nähert. Dadurch kann eine Positionsabweichung zwischen der Position des Luftfahrzeugs und der gewünschten Landeposition zuverlässig kontrolliert werden. Zudem wird aufgrund des Seilwinkels des Halteseils eine rückstellende Kraft in Richtung des Verankerungspunkts auf der Landefläche, der durch die Position der mit der Landefläche verbundenen Seilwinde vorgegeben ist, auf das Luftfahrzeug ausgeübt, sobald eine laterale oder longitudinale Verschiebung des Luftfahrzeugs gegenüber dem Verankerungspunkt auftritt.

Die Erfindung bietet aufgrund der Tatsache, dass das erfindungsgemäße System dazu ausgebildet ist, mit dem Luftfahrzeug mitgeführt zu werden, außerdem den Vorteil, dass auf eine Installation einer Seilwinde und sonstiger aufwändiger Infrastruktur auf der Landefläche, bspw. auf dem Landedeck eines Schiffs, verzichtet werden kann. Dadurch entfällt der Aufwand größerer Umbauten der Landefläche, bspw. des Landedecks des Schiffs. Das erfindungsgemäße System ist daher mit geringem Aufwand flexibel für verschiedenste Landeflächen einsetzbar.

Darüber hinaus bietet die Erfindung den Vorteil, dass das System und insbesondere die Eigenschaften des Halteseils und der Seilwinde individuell auf die Bedürfnisse des Trägersystems, d. h. auf die Bedürfnisse des Luftfahrzeugs, das mit dem erfindungsgemäßem System ausgerüstet wird, abgestimmt werden können. Das erfindungsgemäße System kann daher flexibel für vertikallandefähige Luftfahrzeuge verschiedensten Typs und verschiedenster Art eingesetzt werden - insbesondere auch für unbemannte vertikallandefähige Luftfahrzeuge,.

Die Erfindung unterscheidet sich von aus dem Stand der Technik allgemein bekannten Systemen, bei denen eine Seilwinde von einem Luftfahrzeug mitgeführt wird, insbesondere dadurch, dass nicht ein freies Ende des Halteseils mittels einer an dem Luftfahrzeug verbleibenden Seilwinde von dem Luftfahrzeug abgelassen wird, sondern erfindungsgemäß vorgesehen ist, dass durch Abrollen des Halteseils die Seilwinde von dem Luftfahrzeug auf die Landefläche abgelassen wird. Hieraus ergeben sich weitere Vorteile der Erfindung, die im Folgenden erläutert werden.

Zum einen wird durch das Ablassen der Seilwinde erreicht, dass das Gewicht der Seilwinde dazu genutzt werden kann, um ein schnelles und zielgenaues Ablassen des Halteseils auf die Landefläche auch bei starkem Wind oder sonstigen widrigen Witterungsverhältnissen zu ermöglichen.

Zum anderen ist diesbezüglich von Bedeutung, dass derartige Systeme sich häufig auf eine Sensorik stützen, die an dem Luftfahrzeug angeordnet ist und bspw. zur Messung der über das Halteseil übertragenen Seilkräfte dient. Im praktischen Einsatz hat sich dabei gezeigt, dass eine an dem Luftfahrzeug verbleibende Seilwinde, wie sie bspw. im Zusammenhang mit Bergungs- und Rettungsaufgaben von Hubschraubern aus dem Stand der Technik bekannt ist, während ihres Betriebs erhebliche Interferenzen verursacht. Diese Interferenzen stören die Sensoren und beeinträchtigen in erheblichem Maße die Qualität der Sensormessungen. Derartige auf die an dem Luftfahrzeug angeordneten Sensoren einwirkenden Interferenzen, die im Wesentlichen durch die rotierenden Teile der Seilwinde verursacht werden, können mit der vorliegenden Erfindung weitestgehend vermieden werden, da ein Ablassen der Seilwinde von dem Luftfahrzeug auf die Landefläche vorgesehen ist.

Ein weiterer Vorteil des Ablassens der Seilwinde auf die Landefläche liegt darin, dass Bedieneinrichtungen an der Seilwinde angebracht werden können. Diese Bedieneinrichtungen können dann von Bedienpersonen, die auf der Landefläche die Seilwinde entgegennehmen, zur Bedienung des Systems genutzt werden. Im Übrigen eröffnet das erfindungsgemäße Ablassen der Seilwinde in vorteilhafter Weise die Möglichkeit, Sensoren zur Positions- und/oder Lageerkennung, mit denen die Position und/oder Lage der Seilwinde relativ zu der Landefläche ermittelt werden kann, an der Seilwinde angeordnet werden können. Dies erleichtert das zielgenaue Ablassen des Halteseils und der damit verbundenen Seilwinde auf die Landefläche.

In einer vorteilhaften Weiterbildung der Erfindung ist vorgesehen, dass das System zur Unterstützung eines Startvorgangs des Luftfahrzeugs von der Landefläche ausgebildet ist und
- die Steuereinrichtung dazu eingerichtet ist, die Seilwinde so zu steuern, dass während des Startvorgangs im angekoppelten Zustand des Luftfahrzeugs durch Abrollen des Halteseils eine ununterbrochene Seilkraft auf das Luftfahrzeug ausgeübt und zugleich ein Steigflug des Luftfahrzeugs ermöglicht wird,
- die Kopplungseinrichtung dazu eingerichtet ist, nach einem Erreichen einer Mindest-Flughöhe durch Lösen der lösbaren Verbindung zwischen der Seilwinde und der Landefläche einen entkoppelten Zustand des Luftfahrzeugs herzustellen, in welchem das Luftfahrzeug nicht mit der Landefläche verbunden ist, und
- die Steuereinrichtung dazu eingerichtet ist, die Seilwinde so zu steuern, dass im entkoppelten Zustand des Luftfahrzeugs durch Aufrollen des Halteseils die Seilwinde zu dem Luftfahrzeug hinaufgezogen wird.

Durch eine solche Weiterbildung der Erfindung lassen sich die oben beschriebenen Vorteile des erfindungsgemäßen Systems nicht nur für den Landevorgang, sondern auch für den Startvorgang des Luftfahrzeugs nutzen.

Das Erreichen der Mindest-Flughöhe, in welcher der entkoppelte Zustand des Luftfahrzeugs hergestellt wird, kann auf Grundlage unterschiedlicher sensorisch ermittelter Daten bestimmt werden. Bspw. kann die aktuelle Flughöhe des Luftfahrzeugs mittels einer Seillängen-Messeinheit bestimmt werden, welche die Länge des von der Seilwinde abgerollten Abschnitts des Halteseils bestimmt. Alternativ oder ergänzend hierzu kann zu diesem Zweck sonstige Sensorik des erfindungsgemäßen Systems und/oder des Luftfahrzeugs eingesetzt werden, z. B. Abstandsensoren wie Laserscanner, Sonarabstandssensoren und/oder Radarsensoren. Hierauf wird später noch näher eingegangen.

In einer weiteren vorteilhaften Weiterbildung der Erfindung ist vorgesehen, dass die Steuereinrichtung an der Seilwinde angeordnet ist. Vorgesehen ist demnach, dass die Steuereinrichtung dazu eingerichtet ist, mit der Seilwinde von dem Luftfahrzeug auf die Landefläche abgelassen zu werden. Die Steuereinrichtung kann dabei mit der Seilwinde verbunden und/oder in die Seilwinde integriert sein.

In einer weiteren vorteilhaften Weiterbildung der Erfindung ist vorgesehen, dass die Steuereinrichtung dazu eingerichtet ist, die Kopplungseinrichtung zu steuern. Die Steuereinrichtung ist demnach nicht nur zum Steuern der Seilwinde, sondern auch zum Steuern der Kopplungseinrichtung eingerichtet. Die Steuereinrichtung kann dabei dazu eingerichtet sein, die Kopplungseinrichtung so zu steuern, dass in der oben beschriebenen Art und Weise ein angekoppelter Zustand des Luftfahrzeugs hergestellt werden kann und/oder ein entkoppelter Zustand des Luftfahrzeugs hergestellt werden kann. Eine solche Weiterbildung der Erfindung bietet den Vorteil, dass sowohl die Seilwinde als auch die Kopplungseinrichtung zentral von ein und derselben Steuereinrichtung gesteuert werden können, ohne dass hierzu separate Einrichtungen notwendig sind.

In einer weiteren vorteilhaften Weiterbildung der Erfindung ist vorgesehen, dass die Kopplungseinrichtung einen einschaltbaren und abschaltbaren Elektromagneten umfasst, der dazu eingerichtet ist, im eingeschalteten Zustand eine Magnetkraft auf einen magnetisierbaren Teil der Landefläche auszuüben, wobei die Kopplungseinrichtung dazu eingerichtet ist, eine kraftschlüssige Verbindung zwischen der abgelassenen Seilwinde und der Landefläche durch Einschalten des Elektromagneten herzustellen und durch Abschalten des Elektromagneten zu lösen.

In dieser Weiterbildung der Erfindung ist somit vorgesehen, dass die lösbare Verbindung zwischen der abgelassenen Seilwinde und der Landefläche mittels eines Elektromagneten hergestellt wird. Eine solche Weiterbildung der Erfindung eignet sich besonders für Landeflächen, die sich auf dem Deck eines Schiffs befinden, da die Landefläche in diesem Fall in der Regel ferromagnetisch und damit magnetisierbar ist.

Eine solche Weiterbildung der Erfindung bietet den Vorteil, dass sie ein einfach fernsteuerbares, schnelles und zuverlässiges Herstellen und Lösen der lösbaren Verbindung zwischen der Seilwinde und der Landefläche ermöglicht. Zum Herstellen der kraftschlüssigen Verbindung kann einfach die an der Seilwinde angeordnete Kopplungseinrichtung in einem hinreichend kleinen Abstand über der Landefläche positioniert und anschließend der Elektromagnet eingeschaltet werden. Zum Lösen der kraftschlüssigen Verbindung genügt es, den Elektromagneten abzuschalten.

In einer weiteren vorteilhaften Weiterbildung der Erfindung ist vorgesehen, dass die Befestigungseinrichtung eine Notfall-Trenneinrichtung aufweist. Die Notfall-Trenneinrichtung ist dabei dazu eingerichtet, im Notfall manuell und/oder automatisch ausgelöst zu werden und bei ihrem Auslösen einen abzutrennenden Teil des Systems von dem Luftfahrzeug zu trennen. Der abzutrennende Teil des Systems umfasst dabei mindestens das Halteseil und die Seilwinde.

Die Notfall-Trenneinrichtung kann dabei bspw. als lösbare Kupplung ausgebildet sein.

Durch eine solche Weiterbildung der Erfindung ist es vorteilhaft möglich, in einer Notsituation das Halteseil und die Seilwinde von dem Luftfahrzeug zu trennen. Eine solche Nottrennung kann insbesondere dann notwendig sein, wenn im Verlauf eines Startvorgangs oder eines Landevorgangs ein Verlust der Kontrolle über das Luftfahrzeug droht. In einem solchen Fall kann es notwendig sein, die Seilwinde und das Halteseil von dem Luftfahrzeug zu trennen, um größere Schäden, bspw. eine Beschädigung oder sogar einen Absturz des Luftfahrzeugs, zu verhindern.

Ein manuelles Auslösen der Notfall-Trenneinrichtung kann dabei durch eine Bedienperson erfolgen. Ein automatisches Auslösen der Notfall-Trenneinrichtung kann bspw. in Abhängigkeit von Sensordaten, die von einer Sensorik des Luftfahrzeugs und/oder des erfindungsgemäßen Systems erzeugt werden, erfolgen. Bspw. ist es denkbar, dass die Notfall-Trenneinrichtung dazu eingerichtet ist, automatisch ausgelöst zu werden, wenn die über das Halteseil auf das Luftfahrzeug ausgeübte Seilkraft einen sicherheitskritischen Schwellenwert überschreitet. Die Steuereinrichtung kann dabei insbesondere zum Auslösen der Notfall-Trenneinrichtung eingerichtet sein.

In einer weiteren vorteilhaften Weiterbildung der Erfindung ist vorgesehen, dass die Notfall-Trenneinrichtung einen durch Auslösen der Notfall-Trenneinrichtung abschaltbaren Elektromagneten und ein magnetisierbares Halteelement umfasst. Die Notfall-Trenneinrichtung ist dabei so eingerichtet, dass das Halteelement im eingeschalteten Zustand des Elektromagneten von dem Elektromagneten gehalten und durch Abschalten des Elektromagneten von dem Elektromagneten gelöst wird.

Alternativ oder ergänzend hierzu kann die Notfall-Trenneinrichtung in einer vorteilhaften Weiterbildung der Erfindung eine Sprengeinheit umfassen, die dazu eingerichtet ist, durch Auslösen der Notfall-Trenneinrichtung gezündet zu werden und eine Verbindung zwischen dem abzutrennenden Teil und dem Luftfahrzeug zu sprengen.

Derartige Weiterbildungen der Erfindung, bei denen die Notfall-Trenneinrichtung einen abschaltbaren Elektromagneten und/oder eine Sprengeinheit umfasst, bieten den Vorteil, dass sie ein fernsteuerbares, schnelles und zuverlässiges Trennen des abzutrennenden Teils des Systems von dem Luftfahrzeug erlauben. Eine Notfall-Trenneinrichtung mit einem abschaltbaren Elektromagneten der oben beschriebenen Art bietet darüber hinaus den Vorteil, dass sich der abzutrennende Teil des Systems nach dem Trennen wieder auf einfache Art und Weise mit dem Luftfahrzeug verbinden lässt. Eine Notfall-Trenneinrichtung der oben beschriebenen Art mit einer Sprengeinheit bietet den Vorteil, dass sie besonders einfach und kostengünstig hergestellt werden kann.

In einer weiteren vorteilhaften Weiterbildung der Erfindung ist vorgesehen, dass die Befestigungseinrichtung eine Arretierungseinrichtung aufweist, die dazu eingerichtet ist, die Seilwinde so an der Befestigungseinrichtung zu arretieren, dass das Halteseil entlastet wird.

Die Arretierungseinrichtung kann dabei insbesondere dazu eingerichtet sein, die Seilwinde mittels einer formschlüssigen Verbindung an der Befestigungseinrichtung zu arretieren, z. B. mittels einer Öse und eines in die Öse einhakbaren Hakens. Die Arretierungseinrichtung kann insbesondere einen Arretierungsaktor aufweisen, der dazu eingerichtet ist, die Arretierung der Seilwinde an der Befestigungseinrichtung mittels der Arretierungseinrichtung herzustellen und wieder zu lösen. Die Steuereinrichtung des erfindungsgemäßen Systems kann insbesondere zum Steuern der Arretierungseinrichtung und/oder des Arretierungsaktors eingerichtet sein.

Eine solche Weiterbildung der Erfindung, bei der die Befestigungseinrichtung eine Arretierungseinrichtung aufweist, bietet den Vorteil, dass der Windenmotor, der insbesondere als Elektromotor ausgebildet sein kann, entlastet werden kann. Dasselbe gilt für ein Windengetriebe der Seilwinde, das ebenfalls entlastet werden kann. Wäre die Seilwinde nur über das Halteseil mit der Befestigungseinrichtung (und darüber mit dem Luftfahrzeug) verbunden, müsste nämlich der Windenmotor zwischen Start und Landung des Luftfahrzeugs dauerhaft betrieben werden. Dies würde zu einem hohen Energieverbrauch und Verschleiß des Windenmotors bis hin zu einer möglichen Überhitzung führen. Mit Hilfe der oben erläuterten Arretierungseinrichtung kann die Seilwinde hingegen an der Befestigungseinrichtung arretiert werden, sodass das Halteseil und der Windenmotor entlastet werden, bevor die Seilwinde von dem Luftfahrzeug abgelassen wird und nachdem die Seilwinde wieder zu dem Luftfahrzeug hinaufgezogen wurde. Zu diesem Zweck kann die Arretierung der Seilwinde an der Befestigungseinrichtung mittels der Arretierungseinrichtung gelöst werden, bevor die Seilwinde abgelassen wird, und wieder hergestellt werden, nachdem die Seilwinde wieder zu dem Luftfahrzeug hinaufgezogen wurde.

In einer weiteren vorteilhaften Weiterbildung der Erfindung ist vorgesehen, dass die Seilwinde eine Rutschkupplung aufweist, die dazu eingerichtet ist, die über das Halteseil auf das Luftfahrzeug ausgeübte Seilkraft auf eine maximal zulässige Seilkraft zu begrenzen.

Erfindungsgemäß ist zur Unterstützung sowohl des Landevorgangs als auch des Startvorgangs vorgesehen, dass in dem angekoppelten Zustand des Luftfahrzeugs über das Halteseil eine ununterbrochene Seilkraft auf das Luftfahrzeug ausgeübt wird. Um ein möglichst sicheres Starten und Landen des Luftfahrzeugs zu ermöglichen, ist dabei eine möglichst konstante Seilkraft anzustreben. Dies erfordert in erster Linie, dass Vertikalbewegungen der Landefläche ausgeglichen werden, die bei einer aufwärts bewegten Landefläche zum Abfall der Seilkraft bis hin zu einem Erschlaffen des Seils führen können. Umgekehrt kann eine Abwärtsbewegung der Landefläche ein starkes und schnelles Ansteigen der Seilkraft hervorrufen. Dadurch können Beschädigungen des erfindungsgemäßen Systems, insbesondere der Seilwinde, des Halteseils oder der Befestigungseinrichtung, sowie Beschädigungen des Luftfahrzeugs und/oder ein Verlust der Kontrolle über das Luftfahrzeug bis hin zu einem Absturz hervorgerufen werden.

Eine Weiterbildung der zuvor beschriebenen Art und Weise, bei der die Seilwinde eine Rutschkupplung aufweist, bietet den Vorteil, dass solche unerwünschten Folgen einer unzulässig hohen Seilkraft vermieden werden können. Dies wird mit der Rutschkupplung in an sich bekannter Weise dadurch erreicht, dass ein Durchrutschen der Rutschkupplung einsetzt, wenn das über die Rutschkupplung übertragene Drehmoment ein maximal zulässiges Drehmoment überschreitet, sodass das über die Rutschkupplung übertragbare Drehmoment auf das maximal zulässige Drehmoment begrenzt wird.

Zu beachten ist in diesem Zusammenhang, dass die Seilkraft, die mit einer Seilwinde erzeugt werden kann, in der Regel nicht nur von dem Antriebsdrehmoment des Windenmotors, sondern auch davon abhängt, wie viele Lagen des Seils auf der Seilwinde aufgerollt sind. Dies liegt darin begründet, dass der effektive Hebelarm von der Anzahl der Lagen auf der Seilwinde abhängig ist. Bei gegebenem Antriebsdrehmoment des Windenmotors wird die höchste von der Seilwinde erzeugte Seilkraft daher bei vollständig abgewickelten Seil erreicht. Das maximal zulässige Drehmoment, bei dem das Durchrutschen der Rutschkupplung der Seilwinde einsetzt, kann erfindungsgemäß daher beispielsweise so gewählt werden, dass das maximal zulässige Drehmoment der maximal zulässigen Seilkraft bei vollständig von der Seilwinde abgerolltem Halteseil entspricht.

In einer weiteren vorteilhaften Weiterbildung der Erfindung ist vorgesehen, dass die Rutschkupplung als einstellbare Rutschkupplung ausgebildet ist, mit der ein maximal über die Rutschkupplung übertragbares Drehmoment eingestellt werden kann.

Auf diese Weise ist es vorteilhaft möglich, das maximal über die Rutschkupplung übertragbare Drehmoment, d. h. das Drehmoment, bei dem ein Durchrutschen der Rutschkupplung einsetzt, so einzustellen, dass es dem maximal zulässigen Drehmoment entspricht, aus der die maximal zulässige Seilkraft resultiert. Eine solche Weiterbildung der Erfindung bietet den Vorteil, dass die Einstellung der Rutschkupplung individuell angepasst werden kann an die Eigenschaften des jeweiligen Luftfahrzeugs, mit dem das erfindungsgemäße System zum Einsatz kommt, z. B. an dessen Auftriebsleistung, Leergewicht und/oder von der aktuellen Zuladung abhängiges Gesamtgewicht, sowie an die während des Landevorgangs bzw. des Startvorgangs herrschenden Witterungsbedingungen, z. B. an eine aktuelle Windstärke. Die Flexibilität der Einsatzmöglichkeiten des erfindungsgemäßen Systems kann dadurch in vorteilhafter Weise erhöht werden.

In einer weiteren vorteilhaften Weiterbildung der Erfindung ist vorgesehen, dass die Seilwinde eine automatisch und/oder manuell aktivierbare Rücklaufsperre aufweist. Dies bietet den Vorteil, dass mittels der Rücklaufsperre der Windenmotor und/oder ein Windengetriebe der Seilwinde entlastet werden können. Die Rücklaufsperre kann dabei insbesondere einen Rücklaufsperrenaktor aufweisen, der zum Aktivieren und Deaktivieren der Rücklaufsperre eingerichtet ist. Die Steuereinrichtung des erfindungsgemäßen Systems kann insbesondere zum Steuern der Rücklaufsperre und/oder des Rücklaufsperrenaktors eingerichtet sein.

In einer weiteren vorteilhaften Weiterbildung der Erfindung ist vorgesehen, dass die Seilwinde eine Seilführung aufweist, die dazu eingerichtet ist, beim Aufrollen das Halteseil seitlich zu versetzen. Dies bietet den Vorteil, dass ein gleichmäßiges Aufrollen des Halteseils auf der Seilwinde ermöglicht wird und dadurch Fehlfunktionen der Seilwinde vermieden werden können.

In einer weiteren vorteilhaften Weiterbildung der Erfindung ist vorgesehen, dass das System eine Sensorik aufweist, die einen oder mehrere Sensoren umfasst. Der jeweilige Sensor der Sensorik kann dabei ein an der Befestigungseinrichtung angeordneter Sensor sein, d. h. sein Sensor, der an der an dem Luftfahrzeug befestigten Befestigungseinrichtung verbleibt, wenn die Seilwinde von dem Luftfahrzeug auf die Landefläche abgelassen wird. Der jeweilige Sensor der Sensorik kann aber auch ein an der Seilwinde angeordneter Sensor sein, d. h. ein Sensor, der mit der Seilwinde von dem Luftfahrzeug auf die Landefläche abgelassen wird.

Die Sensorik kann dabei einen oder mehrere der nachfolgenden Sensoren oder sämtliche nachfolgende Sensoren umfassen:
a) einen an der Befestigungseinrichtung und/oder einen an der Seilwinde angeordneten Seilkraftsensor zur Erfassung eines Betrags und/oder einer Richtung und/oder eines Kraftvektors der über das Halteseil auf das Luftfahrzeug ausgeübten Seilkraft,
b) eine an der Seilwinde angeordnete Seillängenmesseinheit zur Erfassung der abgerollten Seillänge zwischen dem Luftfahrzeug und der Landefläche,
c) eine an der Seilwinde angeordnete Winkelmesseinrichtung zur Erfassung des Seilwinkels des Halteseils relativ zur Landefläche und/oder eine an der Befestigungseinrichtung angeordnete Winkelmesseinrichtung zur Erfassung des Seilwinkels des Halteseils relativ zum Luftfahrzeug,
d) eine an der Befestigungseinrichtung und/oder an der Seilwinde angeordnete Kamera oder Multikamera,
e) einen an der Befestigungseinrichtung und/oder an der Seilwinde angeordneten Laserscanner,
f) einen an der Befestigungseinrichtung und/oder an der Seilwinde angeordneten Sonarabstandssensor,
g) einen an der Befestigungseinrichtung und/oder an der Seilwinde angeordneten Radarsensor,
h) einen an der Befestigungseinrichtung und/oder an der Seilwinde angeordneten Inertialsensor.

Eine solche Weiterbildung der Erfindung bietet den Vorteil, dass für die Unterstützung des Start- bzw. Landevorgangs bedeutsame Daten durch die Sensorik erfasst und zur Unterstützung des Start- bzw. Landevorgangs durch das erfindungsgemäße System genutzt werden können. Zu diesen Daten zählen bspw. der laterale und/oder vertikale Abstand des Luftfahrzeugs zur Landefläche, die relative Bewegung zwischen Luftfahrzeug und Landefläche sowie der Betrag und die Richtung der über das Halteseil auf das Luftfahrzeug ausgeübten Seilkraft. Durch die verschiedenen Sensoren der Sensorik kann das erfindungsgemäße System dabei an die jeweils vorliegenden Erfordernisse der Unterstützung des Start- bzw. Landevorgangs des Luftfahrzeugs angepasst werden.

Der dabei vorgesehene Seilkraftsensor kann z. B. in vorteilhafter Weise genutzt werden, um sicherzustellen, dass eine ununterbrochene und möglichst konstante Seilkraft auf das Luftfahrzeug ausgeübt wird. Zu diesem Zweck kann die Steuereinrichtung bspw. die Seilwinde, insbesondere den Windenmotor und/oder die Rutschkupplung der Seilwinde, in Abhängigkeit der durch den Seilkraftsensor erfassten Seilkraft steuern und auf diese Weise das Auftreten einer zu geringen Seilkraft, insbesondere eines Erschlaffens des Halteseils, und/oder das Auftreten einer zu großen Seilkraft verhindern.

Die oben genannte Seillängenmesseinheit zur Erfassung der abgerollten Seillänge zwischen dem Luftfahrzeug und der Landefläche kann in vorteilhafterweise bspw. dazu genutzt werden, die Flughöhe des Luftfahrzeugs im Sinne seines vertikalen Abstands zur Landefläche zu ermitteln. Die Flughöhe kann dabei bspw. sehr einfach aus der von der Seillängenmesseinheit erfassten Seillänge in Verbindung mit einem Seilwinkel des Halteseils relativ zur Landefläche oder relativ zum Luftfahrzeug berechnet werden.

Der Seilwinkel des Halteseils kann in der oben erläuterten Art und Weise mit Hilfe der Winkelmesseinrichtung erfasst werden. Alternativ hierzu kann der Seilwinkel des Halteseils relativ zur Landefläche und/oder relativ zum Luftfahrzeug auch aus der von dem Seilkraftsensor erfassten Richtung der Seilkraft bestimmt werden, da die Richtung der Seilkraft dem Seilwinkel des Halteseils entspricht.

Mit Hilfe der übrigen oben genannten Sensoren der Sensorik, d. h. mit Hilfe einer Kamera und/oder einer Multikamera und/oder eines Laserscanners und/oder eines Solarabstandssensors und/oder eines Radarsensors und/oder eines Inertialsensors, ist es auf vorteilhafte Weise möglich, den lateralen und/oder den vertikalen Abstand des Luftfahrzeugs zu der Landefläche und/oder die relative Position des Luftfahrzeugs zu der Landefläche zu bestimmen und/oder eine relative Lage des Luftfahrzeugs zu einer Lage der Landefläche zu bestimmen.

In einer weiteren vorteilhaften Weiterbildung der Erfindung ist vorgesehen, dass das System einen an der Seilwinde angeordneten und manuell betätigbaren Schalter aufweist, der dazu eingerichtet ist, die Kopplungseinrichtung so zu steuern, dass durch Betätigung des Schalters die Verbindung zwischen der Seilwinde und der Landefläche hergestellt und/oder gelöst werden kann.

Eine Betätigung des Schalters kann dabei beispielsweise auch durch ein Loslassen des Schalters erfolgen, wenn der Schalter als Tastschalter ausgebildet ist. Der an der Seilwinde angeordnete und manuell betätigbare Schalter kann insbesondere als Tastschalter ausgebildet sein, der dazu eingerichtet ist, dass die Verbindung zwischen der Seilwinde und der Landefläche durch Drücken des Tastschalters gelöst und durch Loslassen des Tastschalters wieder hergestellt werden kann.

Auf diese Weise ist er vorteilhaft möglich, dass eine Bedienperson die Kopplungseinrichtung der auf die Landefläche abgelassenen Seilwinde manuell steuert. Dies ist insbesondere dann von Vorteil, wenn nach dem Ablassen der Seilwinde zwar bereits eine Verbindung zwischen der Seilwinde und der Landefläche hergestellt wurde, aber die abgelassene Seilwinde sich noch nicht exakt an dem vorgesehenen Verankerungspunkt befindet, d. h. noch nicht an der richtigen Position auf der Landefläche befindet. In diesem Fall kann eine auf der Landefläche befindliche Bedienperson den an der Seilwinde angeordneten Schalter betätigen, um die Verbindung zwischen der Seilwinde und der Landefläche zu lösen. Anschließend kann die Bedienperson die Seilwinde mit oder ohne technische Hilfsmittel an dem vorgesehenen Verankerungspunkt auf der Landefläche positionieren und danach durch Betätigung des an der Seilwinde angeordneten Schalters die Verbindung zwischen der Seilwinde und der Landefläche herstellen. Darüber hinaus ist es durch einen solchen an der Seilwinde angeordneten und manuell betätigbaren Schalter in vorteilhafter Weise möglich, dass eine auf der Landefläche befindliche Bedienperson in einer Gefahren- oder Notfallsituation durch Betätigung des Schalters die Verbindung zwischen der Seilwinde und der Landefläche lösen kann.

In einer weiteren vorteilhaften Weiterbildung der Erfindung ist vorgesehen, dass der Windenmotor der Seilwinde als Elektromotor ausgebildet ist und das System einen an der Seilwinde angeordneten und mit dem Windenmotor elektrisch verbundenen Akkumulator aufweist. Der Akkumulator ist dabei dazu eingerichtet, eine Versorgungsspannung zumindest für den Windenmotor bereitzustellen. Vorteilhaft kann der Akkumulator darüber hinaus dazu eingerichtet sein, eine Versorgungsspannung für eine, mehrere oder alle sonstigen elektrischen Komponenten des erfindungsgemäßen Systems, insbesondere für an der Seilwinde angeordnete Komponenten des Systems, bereitzustellen.

Eine solche Weiterbildung der Erfindung mit einem an der Seilwinde angeordneten Akkumulator bietet den Vorteil, dass auf eine elektrische Leitung zwischen dem Luftfahrzeug und der Seilwinde, die andernfalls zur Bereitstellung der Versorgungsspannung für den Windenmotor erforderlich wäre, verzichtet werden kann.

In einer weiteren vorteilhaften Weiterbildung der Erfindung ist vorgesehen, dass das System ein an der Seilwinde angeordnetes und mit der Steuereinrichtung datentechnisch verbundenes Funkmodul aufweist, dass dazu eingerichtet ist, Daten über eine Funkverbindung zu senden und/oder zu empfangen.

In einer weiteren vorteilhaften Weiterbildung der Erfindung ist vorgesehen, dass
- die über die Funkverbindung empfangenen Daten Steuerdaten zur Steuerung der Seilwinde umfassen und/oder
- die über die Funkverbindung gesendeten Daten von der Sensorik erzeugte Sensordaten umfassen.

Das Funkmodul kann dabei insbesondere eine zum Senden und/oder Empfangen von Funksignalen eingerichtete Antenne aufweisen.

Eine solche Weiterbildung der Erfindung mit einem an der Seilwinde angeordneten Funkmodul bietet den Vorteil, dass über die Funkverbindung eine Fernsteuerung des Systems möglich ist, insbesondere eine Fernsteuerung der Steuereinrichtung und/oder der Seilwinde und/oder Kopplungseinrichtung und/oder der Arretierungseinrichtung. Darüber hinaus können über die Funkverbindung Sensordaten, die von an der Seilwinde angeordneten Sensoren erzeugt werden, übertragen werden. Dadurch können in vorteilhafter Weise insbesondere Daten zwischen dem Luftfahrzeug und der an der Seilwinde angeordneten Steuereinrichtung und/oder der an der Seilwinde angeordneten Sensorik ausgetauscht werden, sodass auf eine Datenübertragungsleitung zwischen dem Luftfahrzeug und der an der Seilwinde angeordneten Steuereinrichtung bzw. der an der Seilwinde angeordneten Sensorik verzichtet werden kann.

In einer weiteren vorteilhaften Weiterbildung der Erfindung ist vorgesehen, dass die Steuereinrichtung zum Durchführen einer automatischen Seilwindenregelung eingerichtet ist, bei der die Steuereinrichtung mindestens eine Stellgröße der Seilwinde in Abhängigkeit von Sensordaten, die von mindestens einem Sensor der Sensorik erzeugt werden, so einstellt, dass eine über das Halteseile auf das Luftfahrzeug ausgeübte Ist-Seilkraft auf eine Soll-Seilkraft geregelt wird.

Die Sensordaten, in Abhängigkeit derer mindestens eine Stellgröße der Seilwinde eingestellt wird, können dabei bspw. die Ist-Seilkraft repräsentierende Sensordaten eines Seilkraftsensors sein oder solche Sensordaten eines Seilkraftsensors umfassen.

In einer weiteren vorteilhaften Weiterbildung der Erfindung ist vorgesehen, dass die mindestens eine Stellgröße der Seilwinde, die in Abhängigkeit der Sensordaten eingestellt wird, eine von dem Windenmotor erzeugte Antriebsleistung und/oder ein von dem Windenmotor erzeugtes Antriebsdrehmoment und/oder eine Drehzahl des Windenmotors umfasst. Alternativ oder ergänzend hierzu kann die mindestens eine Stellgröße der Seilwinde ein über die Rutschkupplung übertragbares Drehmoment umfassen.

Derartige Weiterbildungen der Erfindung, bei denen die Steuereinrichtung zum Durchführen einer automatischen Seilwindenregelung eingerichtet ist, bieten den Vorteil, dass die mittels der Seilwinde über das Halteseil auf das Luftfahrzeug ausgeübte Seilkraft stabilisiert werden kann. Mittels einer solchen Seilwindenregelung ist es vorteilhaft möglich, in dem angekoppelten Zustand eine annähernd konstante Seilkraft auf das Luftfahrzeug auszuüben, sodass ein besonders sicheres Starten und Landen des Luftfahrzeugs ermöglicht wird. Insbesondere kann mit einer automatischen Seilwindenregelung der zuvor beschriebenen Art ein unerwünschter Abfall der Seilkraft bis hin zu einem Erschlaffen des Seils, hervorgerufen z. B. durch eine Aufwärtsbewegung der Landefläche, detektiert oder bereits im Voraus vermieden werden. Darüber hinaus kann in zuverlässiger Weise eine stetige Annäherung des Luftfahrzeuges an die Landefläche gewährleistet werden, z. B. durch eine Kraftfolgeregelung. Gleichzeitig kann ein starkes und/oder schnelles Ansteigen der Seilkraft, das z. B. durch eine Abwärtsbewegung der Landefläche hervorgerufen werden kann, detektiert oder im Voraus vermieden werden, sodass Beschädigungen des erfindungsgemäßen Systems, Beschädigungen des Luftfahrzeugs und/oder ein Verlust der Kontrolle über das Luftfahrzeug verhindert werden können.

In einer weiteren vorteilhaften Weiterbildung der Erfindung ist vorgesehen, dass das System an der Seilwinde angeordnete optische Signalmittel aufweist, die dazu eingerichtet sind, einen Zustand des Systems anzuzeigen. Die optischen Signalmittel können dabei bspw. LEDs, insbesondere farbige LEDs, und/oder sonstige Leuchtmittel umfassen. Der mittels der optischen Signalmittel angezeigte Zustand des Systems kann dabei bspw. einen Betriebszustand und/oder einen Betriebsmodus der Seilwinde umfassen. Der angezeigte Zustand kann bspw. auch einen Verbindungszustand der Kopplungseinrichtung (Verbindung zwischen Seilwinde und Landefläche hergestellt oder gelöst) umfassen.

Eine solche Weiterbildung der Erfindung bietet den Vorteil, dass der Zustand des Systems mittels der optischen Signalmittel von einer Bedienperson einfach und zuverlässig erkannt werden kann. Dies ist insbesondere von Bedeutung, wenn die auf die Landefläche abgelassene Seilwinde von einer Bedienperson bedient wird.

In einer weiteren vorteilhaften Weiterbildung der Erfindung ist vorgesehen, dass das System eine an der Seilwinde angeordnete Schnittstelle zum Anschluss eines Ladekabels und/oder eines Programmierkabels aufweist. Dies bietet die Vorteile, dass der Akkumulator des Systems auf einfache Art und Weise geladen werden kann und/oder auf einfache Art und Weise eine Programmierung des Systems, bspw. eine Konfiguration des Systems, durchgeführt werden kann.

In einer weiteren vorteilhaften Weiterbildung der Erfindung ist vorgesehen, dass die Befestigungseinrichtung dazu ausgebildet ist, auf einer Gierachse des Luftfahrzeugs unter dem Schwerpunkt des Luftfahrzeugs angeordnet zu werden. Dies bietet den Vorteil, dass eine aus der Einwirkung der Seilkraft auf das Luftfahrzeug resultierende Rotationsbewegung des Luftfahrzeugs in Form eines Rollens und/oder Nickens minimiert werden kann. Wenn sich das Luftfahrzeug im angekoppelten Zustand auf einer durch die abgelassene Seilwinde verlaufenden Vertikalen befindet, können durch die Seilkraft hervorgerufene Rotationsbewegungen des Luftfahrzeugs auf diese Weise sogar vollständig vermieden werden.

In einer weiteren vorteilhaften Weiterbildung der Erfindung ist vorgesehen, dass das System einen Sicherheitsschalter aufweist, der dazu eingerichtet ist, das System in einen sicheren Zustand zu schalten, in welchem der Windenmotor deaktiviert ist. Der Sicherheitsschalter kann dabei insbesondere an der Seilwinde angeordnet sein. Der Sicherheitsschalter kann bspw. eine Buchse und einen in die Buchse einsteckbaren Sicherheitsstecker aufweisen und dazu eingerichtet sein, das System in den sicheren Zustand zu schalten, wenn der Sicherheitsstecker in die Buchse eingesteckt wird.

Eine solche Weiterbildung der Erfindung bietet den Vorteil, dass es auf diese Weise möglich ist, Sach- und/oder Personenschäden, die durch einen ungewollten Betrieb des Windenmotors hervorgerufen werden können, zu vermeiden und somit die Betriebssicherheit des Systems zu verbessern.

In einer weiteren vorteilhaften Weiterbildung der Erfindung ist vorgesehen, dass das Luftfahrzeug ein unbemanntes Luftfahrzeug (UAV) ist. Wie eingangs bereits erläutert wurde, ergeben sich aus einem Einsatz des erfindungsgemäßen Systems für unbemannte Luftfahrzeuge besondere Vorteile. Ein Grund hierfür liegt bspw. darin, dass das erfindungsgemäße System von dem Luftfahrzeug mitgeführt und somit individuell auf die Eigenschaften des jeweiligen Luftfahrzeugs abgestimmt werden kann. Dies ist für unbemannte Luftfahrzeuge von besonderer Bedeutung, da diese in einem besonders großen Spektrum verschiedener Größen- und Gewichtsklassen verfügbar sind.

In einer weiteren vorteilhaften Weiterbildung der Erfindung ist vorgesehen, dass das Luftfahrzeug ein Hubschrauber oder Flugschrauber ist. Dies ist besonders vorteilhaft, da diese vertikallandefähigen Luftfahrzeuge weit verbreitet sind und insbesondere für anspruchsvolle Start- und/oder Landevorgänge, z. B. auf Schiffen oder Hochhausdächern, eingesetzt werden, sodass sich für die Erfindung ein besonderes breites Anwendungsspektrum ergibt.

Die eingangs genannte Aufgabe wird des Weiteren gelöst durch ein vertikallandefähiges Luftfahrzeug mit einem System der zuvor beschriebenen Art.

Mit einem solchen erfindungsgemäßen vertikallandefähigen Luftfahrzeug lassen sich sämtliche erläuterten Vorteile des zuvor beschriebenen erfindungsgemäßen Systems zur Unterstützung eines Start- und/oder Landevorgangs realisieren.

Das erfindungsgemäße System der zuvor beschriebenen Art kann dabei mittels der Befestigungseinrichtung an dem vertikallandefähigen Luftfahrzeug befestigt sein. Die Befestigungseinrichtung kann dabei insbesondere auf einer Gierachse des erfindungsgemäßen vertikallandefähigen Luftfahrzeugs unter dem Schwerpunkt des Luftfahrzeugs angeordnet sein.

In einer vorteilhaften Weiterbildung der Erfindung kann das erfindungsgemäße vertikallandefähige Luftfahrzeug als unbemanntes Luftfahrzeug ausgebildet sein.

In einer weiteren vorteilhaften Weiterbildung der Erfindung kann das erfindungsgemäße vertikallandefähige Luftfahrzeug als Hubschrauber oder Flugschrauber ausgebildet sein. Das Luftfahrzeug kann insbesondere auch als Multicopter ausgebildet sein.

Die eingangs genannte Aufgabe wird erfindungsgemäß außerdem gelöst durch ein Verfahren zur Unterstützung eines Landevorgangs eines vertikallandefähigen Luftfahrzeugs auf einer Landefläche mittels eines Systems, dass ein Halteseil und ein zum Aufrollen und Abrollen des Halteseils eingerichtete Seilwinde und eine an der Seilwinde angeordnete Kopplungseinrichtung aufweist, wobei die Seilwinde über das Halteseil mit dem Luftfahrzeug verbunden ist, mit den folgenden Schritten:
a) Ablassen der Seilwinde von dem Luftfahrzeug auf die Landefläche durch Abrollen des Halteseils von der Seilwinde,
b) Herstellen eines angekoppelten Zustands des Luftfahrzeugs durch Herstellen einer lösbaren Verbindung zwischen der abgelassenen Seilwinde und der Landefläche mittels der Kopplungseinrichtung,
c) Aufrollen des Halteseils mittels der Seilwinde derart, dass während des Landevorgangs in dem angekoppelten Zustand des Luftfahrzeugs eine ununterbrochene Seilkraft auf das Luftfahrzeug ausgeübt wird.

Das System kann dabei insbesondere als erfindungsgemäßes System der zuvor genannten Art ausgebildet sein.

Die eingangs genannte Aufgabe wird des Weiteren gelöst durch ein Verfahren zur Unterstützung eines Startvorgangs eines vertikallandefähigen Luftfahrzeugs auf einer Landefläche mittels eines Systems, dass ein Halteseil und eine zum Aufrollen und Abrollen des Halteseils eingerichtete Seilwinde und eine an der Seilwinde angeordnete Kopplungseinrichtung aufweist, wobei die Seilwinde über das Halteseil mit dem Luftfahrzeug verbunden ist, mit den Schritten:
a) Herstellen eines angekoppelten Zustands des Luftfahrzeugs durch Herstellen einer lösbaren Verbindung zwischen der Seilwinde und der Landefläche mittels der Kopplungseinrichtung,
b) Abrollen des Halteseils mittels der Seilwinde derart, dass während des Startvorgangs in dem angekoppelten Zustand des Luftfahrzeugs eine ununterbrochene Seilkraft auf das Luftfahrzeug ausgeübt und zugleich ein Steigflug des Luftfahrzeugs ermöglicht wird,
c) Herstellen eines entkoppelten Zustands, in welchem das Luftfahrzeug nicht mit der Landefläche verbunden ist, durch Lösen der lösbaren Verbindung zwischen der Seilwinde und der Landefläche mittels der Kopplungseinrichtung nach einem Erreichen einer Mindest-Flughöhe,
d) Hinaufziehen der Seilwinde zu dem Luftfahrzeug durch Aufrollen des Halteseils mittels der Seilwinde.

Das System kann dabei wiederum als erfindungsgemäßes System der zuvor beschriebenen Art ausgebildet sein.

Mit derartigen Verfahren zur Unterstützung eines Landevorgangs oder eines Startvorgangs eines vertikallandefähigen Luftfahrzeugs lassen sich ebenfalls die zuvor im Zusammenhang mit dem erfindungsgemäßen System erläuterten Vorteile realisieren. In einer vorteilhaften Weiterbildung der Erfindung ist vorgesehen, dass sich die Landefläche auf einem auf See befindlichen Wasserfahrzeug oder auf einem auf See befindlichen Schwimmkörper oder einer auf See befindlichen Bohrplattform oder auf dem Dach eines Hochhauses befindet. Das Wasserfahrzeug kann bspw. ein Boot oder ein Schiff oder ein sonstiges Wasserfahrzeug sein. Der Schwimmkörper kann bspw. eine Boje, eine Tonne, ein Ponton, eine schwimmende Plattform oder ein sonstiger Schwimmkörper sein.

Eine derartige Weiterbildung der Erfindung bietet den Vorteil, dass die Erfindung zur Unterstützung von Start- und/oder Landevorgängen genutzt werden kann, die aus den zuvor erläuterten Gründen besonders anspruchsvoll sind.

Die Erfindung soll im Folgenden anhand der in den beigefügten Zeichnungen schematisch dargestellten Ausführungsbeispiele näher erläutert werden. Es zeigen:
- Figur 1 -: eine schematische Schnittdarstellung eines erfindungsgemäßen Systems zur Unterstützung eines Landevorgangs und eines Startvorgangs;
- Figuren 2 bis 4 -: eine schematische Darstellung eines mit dem erfindungsgemäßen System unterstützten Landevorgangs auf einer Landefläche;
- Figuren 5 bis 7 -: eine schematische Darstellung eines mit dem erfindungsgemäßen System unterstützten Startvorgangs von einer Landefläche.

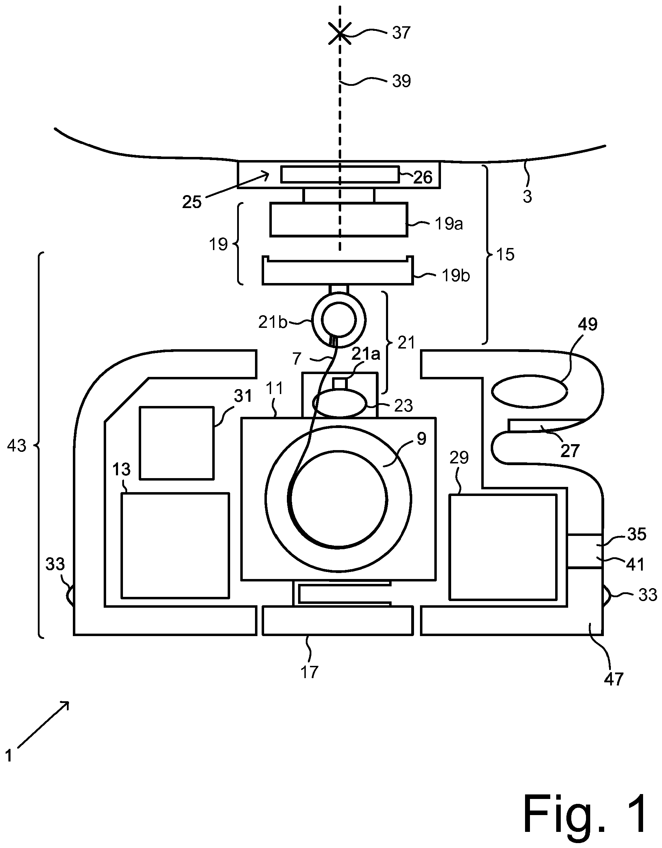

Die Figur 1 veranschaulicht in einer schematischen Schnittdarstellung einen beispielhaften Aufbau eines erfindungsgemäßen Systems 1, das dazu ausgebildet ist, von einem vertikallandefähigen Luftfahrzeug 3 mitgeführt zu werden. Das System 1 ist in diesem Ausführungsbeispiel sowohl zur Unterstützung eines Landevorgangs des Luftfahrzeugs 3 auf einer Landefläche als auch zur Unterstützung eines Startvorgangs des Luftfahrzeugs 3 von der Landefläche eingerichtet.

Erkennbar wird aus der Figur 1, dass das System 1 ein Halteseil 7 und eine zum Aufrollen und Abrollen des Halteseils 7 eingerichtete Seilwinde 11 aufweist. Die Seilwinde 11 hat eine Trommel 9, auf die das Seil 7 aufgerollt und von der das Seil 7 abgerollt werden kann, und einen Windenmotor (nicht gezeigt), der in der in Figur 1 gezeigten Ausführungsform als Elektromotor ausgebildet ist. Mit dem Windenmotor kann die Seilwinde 11 zum Aufrollen und Abrollen des Halteseils 7 angetrieben werden. Zu diesem Zweck ist die Trommel 9 über eine Rutschkupplung (nicht gezeigt) und ein untersetztes Getriebe (nicht gezeigt) mit dem Windenmotor verbunden und kann von diesem angetrieben werden.

Die Seilwinde 11 ist über das Halteseil 7 mit einer Befestigungseinrichtung 15 verbunden. Aus der Figur 1 wird ersichtlich, dass die Befestigungseinrichtung 15 des Systems 1 an dem Luftfahrzeug 3, nämlich an der Unterseite des Rumpfs des Luftfahrzeugs 3, befestigt ist. In der in Figur 1 gezeigten Ausführungsform ist die Befestigungseinrichtung 15 dabei auf einer Gierachse 39 des Luftfahrzeugs 3 unter dem Schwerpunkt 37 des Luftfahrzeugs 3 angeordnet. Auf diese Weise ist die Seilwinde 11 über das Halteseil 7 mit dem Luftfahrzeug 3 verbunden.

Das in der Figur 1 gezeigte System 1 weist außerdem eine an der Seilwinde 11 angeordnete Kopplungseinrichtung 17 und eine ebenfalls an der Seilwinde 11 angeordnete Steuereinrichtung 13 auf, die in der in Figur 1 gezeigten Ausführungsform als elektronische Steuereinrichtung ausgebildet ist und zum Steuern sowohl der Seilwinde 11 als auch der Kopplungseinrichtung 17 eingerichtet ist.

Die Steuereinrichtung 13 ist dazu eingerichtet, die Seilwinde 11 so zu steuern, dass zu Beginn des Landevorgangs des Luftfahrzeugs 3 durch Abrollen des Halteseils 7 die Seilwinde 11 von dem Luftfahrzeug 3 auf die Landefläche abgelassen wird.

Die Kopplungseinrichtung 17 ist dazu eingerichtet, durch Herstellen einer lösbaren Verbindung zwischen der abgelassenen Seilwinde 11 und der Landefläche einen angekoppelten Zustand des Luftfahrzeugs 3 herzustellen, in welchem das Luftfahrzeug 3 über das Halteseil 7 mit der Landefläche verbunden ist. In der hier gezeigten Ausführungsform weist die Kopplungseinrichtung 17 zu diesem Zweck einen einschaltbaren und abschaltbaren Elektromagneten auf. Der Elektromagnet der Kupplungseinrichtung 17 ist dazu eingerichtet, im eingeschalteten Zustand eine Magnetkraft auf einen magnetisierbaren Teil der Landefläche auszuüben und die Kopplungseinrichtung 17 ist dazu eingerichtet, mittels der Magnetkraft eine kraftschlüssige Verbindung zwischen der abgelassenen Seilwinde 11 und der Landefläche durch Einschalten des Elektromagneten herzustellen und durch Abschalten des Elektromagneten zu lösen. Die Kopplungseinrichtung 17 ist auf diese Weise dazu eingerichtet, durch Einschalten des Elektromagneten den angekoppelten Zustand des Luftfahrzeugs 3 herzustellen und durch Abschalten des Elektromagneten einen entkoppelten Zustand des Luftfahrzeugs 3 herzustellen, in welchem das Luftfahrzeug 3 nicht mit der Landefläche verbunden ist.

Die Steuereinrichtung 13 ist des Weiteren dazu eingerichtet, die Seilwinde 11 so zu steuern, dass während des Landevorgangs durch Aufrollen des Halteseils 7 in dem angekoppelten Zustand des Luftfahrzeugs 3 eine ununterbrochene Seilkraft auf das Luftfahrzeug 3 ausgeübt wird.

Auf diese Weise ist das in der Figur 1 gezeigte System 1 zur Unterstützung eines Landevorgangs des vertikallandefähigen Luftfahrzeugs 3 auf einer Landefläche eingerichtet. Darüber hinaus ist das in der Figur 1 gezeigte System 1 auch zur Unterstützung eines Startvorgangs des Luftfahrzeugs 3 von der Landefläche eingerichtet.

Die Steuereinrichtung 13 des in der Figur 1 gezeigten Systems 1 ist zu diesem Zweck dazu eingerichtet, die Seilwinde 11 so zu steuern, dass während des Startvorgangs im angekoppelten Zustand des Luftfahrzeugs 3 durch Abrollen des Halteseils 7 eine ununterbrochene Seilkraft auf das Luftfahrzeug 3 ausgeübt und zugleich ein Steigflug des Luftfahrzeugs 3 ermöglicht wird.

Die Kopplungseinrichtung 17 ist dabei dazu eingerichtet, nach einem Erreichen einer Mindest-Flughöhe durch Lösen der lösbaren Verbindung zwischen der Seilwinde 11 und der Landefläche einen entkoppelten Zustand des Luftfahrzeugs 3 herzustellen, in welchem das Luftfahrzeug 3 nicht mit der Landefläche verbunden ist. Zu diesem Zweck ist die Kopplungseinrichtung 17 dazu eingerichtet, nach dem Erreichen der Mindest-Flughöhe den Elektromagneten der Kopplungseinrichtung 17 abzuschalten und auf diese Weise die kraftschlüssige Verbindung zwischen der abgelassenen Seilwinde 11 und der Landefläche zu lösen.

Die Steuereinrichtung 13 ist des Weiteren dazu eingerichtet, die Seilwinde 11 so zu steuern, dass im entkoppelten Zustand des Luftfahrzeugs 3 durch Aufrollen des Halteseils 7 auf die Trommel 9 die Seilwinde 11 zu dem Luftfahrzeug 3 hinaufgezogen werden kann.

Das in der Figur 1 gezeigte System 1 weist des Weiteren eine Sensorik 25 auf. Die Sensorik 25 umfasst einen an der Befestigungseinrichtung 15 angeordneten Seilkraftsensor 26 zur Erfassung eines Kraftvektors der über das Halteseil 7 auf das Luftfahrzeug 3 ausgeübten Seilkraft, d. h. zur Erfassung eines Betrags und einer Richtung der Seilkraft. Der Seilkraftsensor 26 ist der in der Figur 1 gezeigten Ausführungsform als Dreiachs-Kraftmesser ausgebildet. Die Sensorik 25 des Systems 1 umfasst darüber hinaus eine an der Seilwinde 11 angeordnete Seillängenmesseinheit (nicht gezeigt) zur Erfassung der abgerollten Seillänge zwischen dem Luftfahrzeug 3 und der Landefläche.

Durch eine Auswertung der von der an der Seilwinde 11 angeordneten Seillängenmesseinheit und des an der Befestigungseinrichtung 15 angeordneten Seilkraftsensors 26 erzeugten Sensordaten, nämlich der die Richtung des Kraftvektors repräsentierenden Sensordaten des Seilkraftsensors sowie der die Seillänge repräsentierenden Sensordaten der Seillängenmesseinheit, ist es bspw. möglich, die aktuelle Flughöhe des Luftfahrzeugs zu bestimmen. Auf diese Weise kann bspw. auch das Erreichen einer Mindest-Flughöhe detektiert werden, in der der entkoppelte Zustand des Luftfahrzeugs durch die Kopplungseinrichtung 17 hergestellt wird.

Die Steuereinrichtung 13 ist des Weiteren dazu eingerichtet, die Seilwinde 11 so zu steuern, dass eine näherungsweise konstante Seilkraft auf das Luftfahrzeug 3 ausgeübt wird. Zu diesem Zweck weist die Seilwinde 11 des erfindungsgemäßen Systems 1 in der in Figur 1 gezeigten Ausführungsform eine einstellbare Rutschkupplung auf, mit der ein maximal über die Rutschkupplung von dem Windenmotor auf das Untersetzungsgetriebe und die Trommel 9 übertragbares Drehmoment eingestellt werden kann. Die Rutschkupplung der Seilwinde 11 ist auf diese Weise dazu eingerichtet, die über das Halteseil 7 auf das Luftfahrzeug 3 ausgeübte Seilkraft auf eine maximal zulässige Seilkraft zu begrenzen. Dadurch kann vermieden werden, dass eine unerwünscht hohe Seilkraft, die bspw. durch eine Abwärtsbewegung der Landefläche hervorgerufen werden kann, über das Halteseil 7 auf das Luftfahrzeug 3 ausgeübt wird, d. h. die mechanisch über das Halteseil 7 auf das Luftfahrzeug 3 ausgeübte Seilkraft wird mit Hilfe der einstellbaren Rutschkupplung stabilisiert.

Zur weiteren Stabilisierung der Seilkraft, d. h. zur Bereitstellung einer möglichst konstanten Seilkraft, ist die Steuereinrichtung 13 darüber hinaus zum Durchführen einer automatischen Seilwindenregelung eingerichtet, bei der die Steuereinrichtung 13 eine von dem Windenmotor der Seilwinde 11 erzeugte Antriebsleistung in Abhängigkeit von Sensordaten, die von dem Seilkraftsensor 26 erzeugt wurden, so einstellt, dass eine über das Halteseil 7 auf das Luftfahrzeug 3 ausgeübte Ist-Seilkraft auf eine Soll-Seilkraft geregelt wird. Die von dem Seilkraftsensor 26 erzeugten Sensordaten repräsentieren dabei die über das Halteseil 7 auf das Luftfahrzeug 3 ausgeübte Ist-Seilkraft. Auf diese Weise kann einerseits vermieden werden, dass eine unzulässig große Seilkraft, wie sie bspw. durch eine Abwärtsbewegung der Landefläche hervorgerufen werden kann, über das Halteseil 7 auf das Luftfahrzeug 3 ausgeübt wird. Zum anderen können auf diese Weise aber auch eine unerwünscht geringe Seilkraft und ein Erschlaffen des Seils, z. B. verursacht durch eine Aufwärtsbewegung der Landefläche, vermieden werden.

Im Ergebnis ist es mit dem in der Figur 1 gezeigten System somit möglich, im angekoppelten Zustand des Luftfahrzeugs 3 eine ununterbrochene und annähernd konstante Seilkraft auf das Luftfahrzeug 3 auszuüben.

In der in Figur 1 gezeigten Ausführungsform weist die Befestigungseinrichtung 1 außerdem eine Notfall-Trenneinrichtung 19 auf. Die Notfall-Trenneinrichtung 19 ist dabei dazu eingerichtet, im Notfall automatisch ausgelöst zu werden. Die Notfall-Trenneinrichtung 19 kann in der in Figur 1 gezeigten Ausführungsform aber auch manuell ausgelöst werden. Die Notfall-Trenneinrichtung 19 ist dazu eingerichtet, bei ihrem Auslösen einen abzutrennenden Teil 43 des Systems 1, der das Halteseil 7 und die Seilwinde 11 umfasst, von dem Luftfahrzeug 3 zu trennen.

Die Notfall-Trenneinrichtung 19 ist dabei so eingerichtet, dass ein automatisches Auslösen der Notfall-Trenneinrichtung 19 erfolgt, wenn die über das Halteseil 7 auf das Luftfahrzeug 3 ausgeübte und durch den Seilkraftsensor 26 erfasste Seilkraft einen sicherheitskritischen Schwellenwert überschreitet. Die Notfall-Trenneinrichtung 19 ist darüber hinaus aber auch dazu eingerichtet, manuell durch eine Bedienperson ausgelöst zu werden.

Die Notfall-Trenneinrichtung 19 umfasst einen durch Auslösen der Notfall-Trenneinrichtung 19 abschaltbaren Elektromagneten 19a und ein magnetisierbares Halteelement 19b, dass in der in Figur 1 gezeigten Ausführungsform als flächige, magnetisierbare Metallplatte ausgebildet ist. Die Notfall-Trenneinrichtung 19 ist dazu eingerichtet, dass das Halteelement 19b im eingeschalteten Zustand des Elektromagneten 19a von dem Elektromagneten 19a gehalten wird und durch Abschalten des Elektromagneten 19a von dem Elektromagneten 19a gelöst wird. Durch ein Abschalten des Elektromagneten 19a kann die Notfall-Trenneinrichtung 19 somit im Notfall einen abzutrennenden Teil 43 des Systems 1 von dem Luftfahrzeug 3 trennen.

Des Weiteren lässt die Darstellung der Figur 1 erkennen, dass das erfindungsgemäße System 1 in der gezeigten Ausführungsform eine Arretierungseinrichtung 21 aufweist, die dazu eingerichtet ist, die Seilwinde 11 so an der Befestigungseinrichtung 15 zu arretieren, dass das Halteseil 7 entlastet wird. Die Arretierungseinrichtung 21 weist zu diesem Zweck eine Öse 21b und einen in die Öse 21b einhakbaren Haken 21a auf, sodass durch Einhaken des Hakens 21a in die Öse 21b eine formschlüssige Verbindung zwischen der Seilwinde 11 und der Befestigungseinrichtung 15 hergestellt werden kann. Das Halteseil 7 wird auf diese Weise entlastet. Die Arretierungseinrichtung 21 weist einen Arretierungsaktor (nicht gezeigt) auf, der dazu eingerichtet ist, die Arretierung der Seilwinde 11 an der Befestigungseinrichtung 15 herzustellen und der durch die Steuereinrichtung 13 gesteuert werden kann.

Mit der Arretierungseinrichtung 21 können die Komponenten der Seilwinde 11, insbesondere der Windenmotor, das Windengetriebe und die Rutschkupplung, entlastet werden, wenn sich die Seilwinde 11 in einem zum Luftfahrzeug 3 hinaufgezogenen Zustand befindet. Die Arretierung mittels der Arretierungseinrichtung 21 kann zu diesem Zweck nach dem vollständigen Hinaufziehen der Seilwinde 11 zu dem Luftfahrzeug 3 hergestellt werden. Vor dem Ablassen der Seilwinde 11 von dem Luftfahrzeug 3 muss die Arretierungseinrichtung 21 dann wieder gelöst werden, um ein Ablassen der Seilwinde 11 von dem Luftfahrzeug 3 zu ermöglichen.

Darüber hinaus wird aus der Figur 1 erkennbar, dass die Seilwinde 11 eine Seilführung 23 aufweist, die dazu eingerichtet ist, beim Aufrollen des Halteseils 7 das Halteseil 7 seitlich auf der Trommel 9 zu versetzen. Die Seilführung 23 gewährleistet auf diese Weise ein gleichmäßiges Aufrollen des Halteseils 7 auf der Trommel 9 der Seilwinde 11. Die Seilwinde 11 verfügt in dem in Figur 1 gezeigten Ausführungsbeispiel außerdem über eine sowohl automatisch als auch manuell aktivierbare Rücklaufsperre mit einem zum Aktivieren und Deaktivieren der Rücklaufsperre eingerichteten Rücklaufsperrenaktor. Die Steuereinrichtung 13 ist zum Steuern des Rücklaufsperrenaktors und damit zum Steuern der Rücklaufsperre eingerichtet.

Aus der Darstellung der Figur 1 wird des Weiteren ersichtlich, dass das System 1 in der gezeigten Ausführungsform ein an der Seilwinde 11 angeordnetes Funkmodul 31 aufweist. Das Funkmodul 31 ist mit der Steuereinrichtung 13 über eine Datenleitung verbunden und dazu eingerichtet, über eine an das Funkmodul 31 angeschlossene Antenne Steuerdaten zur Steuerung der Seilwinde 11 zu empfangen und von der Sensorik 25 erzeugte Sensordaten zu senden und zu empfangen. Auf diese Weise ist es z. B. möglich, die Seilwinde 11 über die durch das Funkmodul 31 bereitgestellte Funkverbindung aus der Ferne fernzusteuern, indem entsprechende Steuerdaten in Form von Steuerbefehlen über das Funkmodul 31 an die Steuereinrichtung 13 übermittelt werden.

Die in der Figur 1 gezeigte Ausführungsform des erfindungsgemäßen Systems 1 weist außerdem einen an der Seilwinde 11 angeordneten Akkumulator 29 auf. Der Akkumulator 29 ist dazu eingerichtet, eine Versorgungsspannung sowohl für den als Elektromotor ausgebildeten Windenmotor als auch für alle übrigen elektrischen und elektronischen Komponenten des Systems 1 bereitzustellen und ist zu diesem Zweck mit dem Windenmotor und mit der Steuereinrichtung 13 elektrisch verbunden.

Das System 1 weist darüber hinaus ein Gehäuse 47 auf, das in der in Figur 1 gezeigten Ausführungsform als GFK-verstärktes Hartschaumgehäuse ausgebildet ist. Grundsätzlich kommt als Material des Gehäuses 47 aber jedes beliebige Material in Betracht, dass eine hinreichende Stabilität aufweist. Vorteilhaft kann das Gehäuse 47 so ausgebildet sein und insbesondere das Material des Gehäuses 47 so gewählt sein, dass das Gehäuse 47 einen ausreichenden Schutz vor mechanischen Einwirkungen und/oder Feuchtigkeit und/oder Witterungseinflüssen bietet. In der in Figur 1 gezeigten Ausführungsform des Systems 1 hat das Gehäuse 47 einen kreisförmigen Querschnitt und weist an seinem oberen Rand eine abgerundete Form auf. Aus der Figur 1 wird erkennbar, dass im Inneren des Gehäuses 47 die Seilwinde 11 mit dem Haken 21a der Arretierungseinrichtung 21, die Steuereinrichtung 13, der Akkumulator 29 sowie das Funkmodul 31 angeordnet sind. Das Gehäuse 47 weist zudem einen Griff 49 auf, mit dem eine Bedienperson das Gehäuse 47 greifen kann, um z. B. die auf die Landefläche abgelassene Seilwinde 11 manuell auf der Landefläche zu versetzen.

Des Weiteren lässt die Figur 1 erkennen, dass das System 1 in der gezeigten Ausführungsform einen in das Gehäuse 47 eingelassenen und manuell betätigbaren Schalter 27 aufweist, der als Tastschalter ausgebildet ist. Der als Tastschalter ausgebildete Schalter 27 ist dazu eingerichtet, die Kopplungseinrichtung 17 so zu steuern, dass durch Drücken des Tastschalters die Verbindung zwischen der Seilwinde 11 und der Landefläche gelöst wird, in dem der Elektromagnet der Kopplungseinrichtung 17 abgeschaltet wird, und durch Loslassen des Tastschalters die Verbindung zwischen der Seilwinde 11 und der Landefläche wieder hergestellt wird, in dem der Elektromagnet der Kopplungseinrichtung 17 eingeschaltet wird. Dadurch kann eine auf der Landefläche befindliche Bedienperson auf einfache Art und Weise die Verbindung zwischen der Seilwinde 11 und der Landefläche lösen und wieder herstellen, um z. B. die Seilwinde 11 auf der Landefläche zu versetzen.

An der Außenseite des Gehäuses 47 sind außerdem optische Signalmittel 33 angeordnet, die in der in Figur 1 gezeigten Ausführungsform als farbige LEDs ausgebildet sind. Die optischen Signalmittel 33 sind dazu eingerichtet, einen Zustand des Systems 1 anzuzeigen, wobei der Zustand des Systems 1 den Verbindungszustand der Kopplungseinrichtung 17 umfasst.

In das Gehäuse 47 ist in der in Figur 1 gezeigten Ausführungsform des Systems 1 außerdem eine Schnittstelle 35 eingelassen, die zum Anschluss eines Ladekabels oder Programmierkabels genutzt werden kann. Die in das Gehäuse 47 eingelassene Schnittstelle 35 bildet zugleich eine Buchse eines Sicherheitsschalters 41, der dazu eingerichtet ist, das System 1 in einen sicheren Zustand zu schalten, in welchem der Windenmotor der Seilwinde 11 deaktiviert ist, wenn in die Buchse des Sicherheitsschalters 41 ein in die Buchse einsteckbarer Sicherheitsstecker eingesteckt wird.

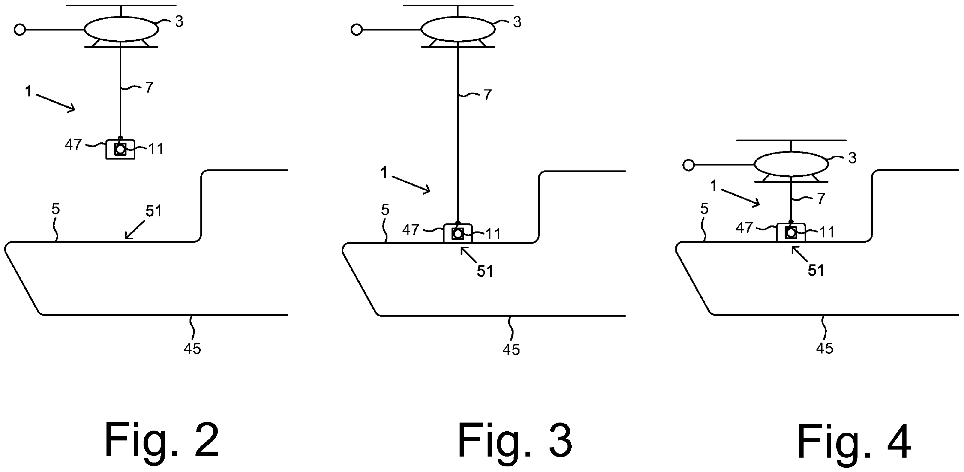

In den Figuren 2 bis 4 ist ein beispielhafter Ablauf eines erfindungsgemäßen Verfahrens zur Unterstützung eines Landevorgangs eines vertikallandefähigen Luftfahrzeugs 3 auf einer Landefläche 5 schematisch dargestellt. Die Landefläche 5 befindet sich dabei auf einem auf See befindlichen Schiff 45, d. h. auf einem Wasserfahrzeug.

Das vertikallandefähige Luftfahrzeug 3 ist in dem in den Figuren 2 bis 4 gezeigten Ausführungsbeispiel als unbemannter Hubschrauber ausgebildet und führt zur Unterstützung des Landevorgangs ein erfindungsgemäßes System 1 der zuvor beschrieben Art mit, das ein Halteseil 7 sowie eine zum Aufrollen und Abrollen des Halteseils 7 eingerichtete Seilwinde 11 aufweist, wobei die Seilwinde 11 in einem Gehäuse 47 angeordnet ist. Das Schiff 45 dient dem Luftfahrzeug 3 dabei als Operationsbasis, von der aus das Luftfahrzeug 3 startet und auf der das Luftfahrzeug 3 landet.

Das unbemannte Luftfahrzeug 3 wird von einem Piloten ferngesteuert, der sich in einer Operationszentrale auf dem Schiff 45 befindet. Das Luftfahrzeug 3 kann dabei kontinuierlich Daten mit dem Piloten und mit dem Schiff 45 austauschen, sodass die Schiffsbesatzung und der Pilot jederzeit über den Zustand des Luftfahrzeugs 3 (Position, Geschwindigkeit, aktuelle Aufgabe) informiert sind. Der Zustand des Schiffs 45, darunter seine Position, Geschwindigkeit und Lage in Bezug zum erdlotfesten Koordinatensystem, ist in modernen Schiffen bspw. über Satellitenempfänger und Gyroskope verfügbar oder kann mit Hilfe der Sensoren der an Bord des Luftfahrzeugs 3 befindlichen Sensorik 25 bestimmt werden. Aus diesen Daten können die Position und die Lage der Landefläche 5 relativ zur Position und Lage des Luftfahrzeugs 3 ermittelt werden.

Auf Grundlage dieser Informationen ist es möglich, das Luftfahrzeug 3 so zu steuern, dass es sich aus größerer Entfernung von achtern an das Schiff 45 annähert und sich in einer Flughöhe von ca. 20 - 30 Meter mit einer Genauigkeit von wenigen Metern über der Landefläche 5 des Schiffs 45 positioniert. Das Luftfahrzeug 3 positioniert sich dabei leicht nach Luv versetzt zur Landefläche 5, sodass die später abgelassene Seilwinde 11 durch den Windeinfluss an einem Verankerungspunkt 51, der sich in der Mitte der Landefläche 5 befindet, aufkommen kann.

Nach der abgeschlossenen Positionierung des Luftfahrzeugs 3 wird die Seilwinde 11 aktiviert und die Arretierung der Arretierungseinrichtung 21 gelöst, sodass die Seilwinde 11 nur noch über das Halteseil 7 mit dem Luftfahrzeug 3 verbunden ist.

In der Figur 2 ist gezeigt, dass die Seilwinde 11 anschließend durch Abrollen des Halteseils 7 von der Seilwinde 11 auf die Landefläche 5 abgelassen wird. Das Luftfahrzeug 3 verbleibt während des Ablassens der Seilwinde 11 in einer konstanten Flughöhe.

Kurz vor dem Aufsetzen der Seilwinde 11 auf der Landefläche 5 wird ein angekoppelter Zustand des Luftfahrzeugs 3 hergestellt, indem mittels der Kopplungseinrichtung 17 eine lösbare Verbindung zwischen der abgelassenen Seilwinde 11 und der Landefläche 5 hergestellt wird. Zu diesem Zweck wird der Elektromagnet der Kopplungseinrichtung 17 eingeschaltet.

In der Figur 3 ist dargestellt, dass in diesem Stadium des Landevorgangs die Seilwinde 11 an dem Verankerungspunkt 51 auf der Landefläche 5 aufgesetzt hat und mittels der Kopplungseinrichtung 17 der angekoppelte Zustand des Luftfahrzeugs 3, in welchem das Luftfahrzeug 3 über das Halteseil 7 mit der Landefläche 5 verbunden ist, hergestellt wurde.

Da als Landefläche 5 dienende Schiffsdecks üblicherweise mit rauen Beschichtungen versehen sind, die ein Rutschen auf dem Schiffsdeck verhindern sollen, kann die Haftwirkung des Elektromagneten der Kopplungseinrichtung 17, d. h. die kraftschlüssige Verbindung zwischen der abgelassenen Seilwinde 11 und der Ladenfläche 5, beeinträchtigt werden. In den Ausführungsbeispielen der Figuren 2 bis 4 und 5 bis 7 wurde daher das Schiffsdeck für ein mit dem erfindungsgemäßen System 1 unterstütztes Starten und Landen dahingehend vorbereitet, dass im Bereich des Verankerungspunkts 51 ein für eine Verbindung mit der Kopplungseinrichtung 17 ausreichend großer Bereich des Schiffdecks mit einer glatten Oberfläche versehen wurde.

Eine auf der Landefläche 5 befindliche Bedienperson, die den Zustand der Seilwinde 11 und der Kopplungseinrichtung 17 anhand der farbigen LEDs 33 erkennen kann, kann die Seilwinde 11 nach ihrem Aufsetzen auf der Landefläche 5 exakt an dem mit der glatten Oberfläche versehenen Verankerungspunkt 51 positionieren, wenn die Seilwinde 11 nicht bereits exakt an dem Verankerungspunkt 51 auf der Landefläche 5 aufgesetzt hat. Zu diesem Zweck kann die Bedienperson das Gehäuse 47 des Systems 1 am Griff 49 ergreifen, über den als Tastschalter ausgebildeten manuell betätigbaren Schalter 27 den Elektromagneten der Kopplungseinrichtung 17 ausschalten, die Seilwinde 11 exakt an dem Verankerungspunkt 51 positionieren und den Elektromagneten der Kopplungseinrichtung 17 durch Loslassen des Tastschalters wieder einschalten.

Im Anschluss wird das Halteseil 7 mittels der Seilwinde 11 derart aufgerollt, dass während des Landevorgangs in dem angekoppelten Zustand des Luftfahrzeugs 3 eine ununterbrochene Seilkraft auf das Luftfahrzeug 3 ausgeübt wird. Auswirkungen von Vertikalbewegungen der auf dem Schiff 45 befindlichen Landefläche 5 auf die Seilkraft, die insbesondere durch ein Stampfen des Schiffs 45 hervorgerufen werden können, werden durch die Rutschkupplung und die automatische Seilwindenregelung des erfindungsgemäßen Systems 1 in der zuvor beschriebenen Art und Weise kompensiert, sodass während des Landevorgangs in dem angekoppelten Zustand des Luftfahrzeugs eine näherungsweise konstante Seilkraft auf das Luftfahrzeug 3 ausgeübt wird und sich die Flughöhe des Luftfahrzeugs 3 stetig und mit näherungsweise konstanter Geschwindigkeit verringert.

Dieses Stadium des erfindungsgemäßen Verfahrens ist schematisch in der Figur 4 dargestellt. Erkennbar ist darin, dass ein Sinkflug des Luftfahrzeug 3 eingeleitet wurde und das Luftfahrzeug 3 zu dem in der Figur 4 gezeigten Zeitpunkt bereits ca. zwei Drittel seiner Flughöhe verloren hat.

Wenn sich das Luftfahrzeug 3 im angekoppelten Zustand während des Start- oder Landevorgangs in einer lateral zu der Position der Seilwinde 11 versetzten Position befindet, erzeugt dies neben einer vertikalen auch eine horizontale Seilkraftkomponente, die auf das Luftfahrzeug 3 wirkt. Durch diese horizontale Seilkraftkomponente wird das Luftfahrzeug 3 an die gewünschte Position über der Winde 11 gezogen. Die über das Halteseil 7 auf das Luftfahrzeug 3 ausgeübte Seilkraft unterstützt somit die Positionshaltung des Luftfahrzeugs 3. Dabei können durch die auf das Luftfahrzeug 3 ausgeübte Seilkraft leichte Nick- und/oder Rollbewegungen des Luftfahrzeugs 3 hervorgerufen werden, die allerdings von einem Fluglageregler des Luftfahrzeugs 3 problemlos ausgeglichen werden können.

Das Aufrollen des Halteseils 7 wird in der beschriebenen Art und Weise fortgesetzt, bis das Luftfahrzeug 3 auf der Landefläche 5 aufsetzt. Nach dem Aufsetzen kann das Luftfahrzeug 3 mit Hilfe des erfindungsgemäßen Systems 1 auf der Landefläche 5 fixiert werden. Hierzu kann mittels der Arretierungseinrichtung 21 die Seilwinde 11 an dem Luftfahrzeug 3 arretiert werden.

Sollte es während eines Start- oder Landevorgangs zu einem Notfall kommen, z. B. zu einer Störung innerhalb des erfindungsgemäßen Systems 1 oder innerhalb des Luftfahrzeugs 3 oder einer sonstigen Störung, kann die Notfall-Trenneinrichtung 19 ausgelöst und auf diese Weise ein abzutrennender Teil des Systems 1, der das Halteseil 7 und die Seilwinde 11 umfasst, von dem Luftfahrzeug 3 getrennt werden.

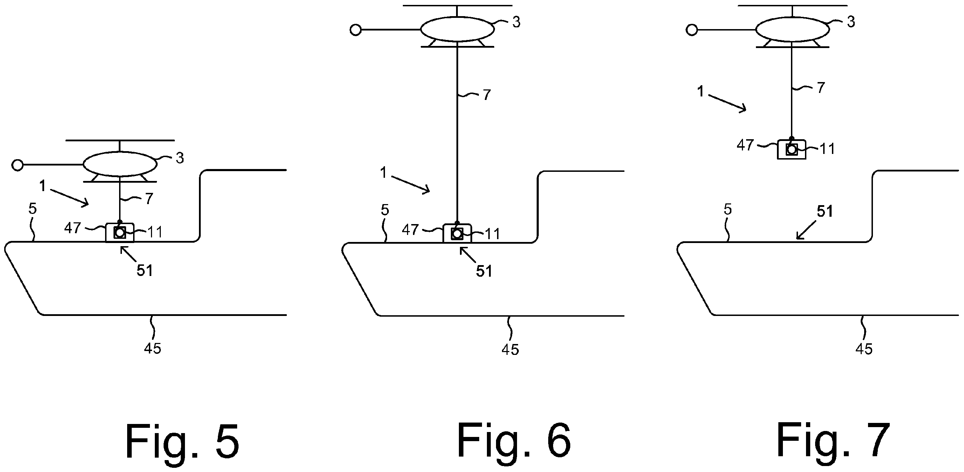

Die Figuren 5 bis 7 veranschaulichen den Ablauf eines erfindungsgemäßen Verfahrens zur Unterstützung eines Startvorgangs des vertikallandefähigen Luftfahrzeugs 3. Zu diesem Zweck ist schematisch ein beispielhafter Startvorgang des Luftfahrzeugs 3 von der Landefläche 5 dargestellt. Das Luftfahrzeug 3, das von dem Luftfahrzeug 3 mitgeführte erfindungsgemäße System 1 mit dem Halteseil 7, der Seilwinde 11 und dem Gehäuse 47, die Landefläche 5, das Wasserfahrzeug 45 und der Verankerungspunkt 51 entsprechen dabei dem in den Figuren 2 bis 4 erläuterten Ausführungsbeispiel, sodass auf die diesbezüglichen Ausführungen verwiesen werden kann.

Zur Unterstützung des Startvorgangs des Luftfahrzeugs 3 wird in einem ersten Schritt zunächst ein angekoppelter Zustand des Luftfahrzeugs 3 durch Herstellen einer lösbaren Verbindung zwischen der Seilwinde 11 und der Landefläche 5 mittels der Kopplungseinrichtung 17 hergestellt.

Die Figur 5 veranschaulicht, dass in einem zweiten Schritt das Halteseil 7 mittels der Seilwinde 11 derart abgerollt wird, dass während des Startvorgangs im angekoppelten Zustand des Luftfahrzeugs 3 eine ununterbrochene Seilkraft auf das Luftfahrzeug 3 ausgeübt und zugleich ein Steigflug des Luftfahrzeug 3 ermöglicht wird. Das Abrollen des Halteseils 7 im angekoppelten Zustand des Luftfahrzeugs 3 wird fortgesetzt, bis das Luftfahrzeug 3 eine Mindest-Flughöhe erreicht hat. Zu dem in der Figur 5 gezeigten Zeitpunkt hat das Luftfahrzeug 3 bereits ca. ein Drittel der Mindest-Flughöhe erreicht.

Zu dem in der Figur 6 gezeigten Zeitpunkt hat das Luftfahrzeug 3 die Mindest-Flughöhe erreicht. Zu diesem Zeitpunkt wird daher ein entkoppelter Zustand hergestellt, in welchem das Luftfahrzeug 3 nicht mehr mit der Landefläche 5 verbunden ist. Dies geschieht dadurch, dass die lösbare Verbindung zwischen der Seilwinde 11 und der Landefläche 5 mittels der Kopplungseinrichtung 17 gelöst wird.

Die Figur 7 lässt erkennen, dass anschließend in einem weiteren Verfahrensschritt die Seilwinde 11 durch Aufrollen des Halteseils 7 mittels der Seilwinde 11 zu dem Luftfahrzeug 3 hinauf gezogen wird. Nach dem die Seilwinde 11 vollständig zu dem Luftfahrzeug 3 hinauf gezogen wurde, kann sie mittels der Arretierungseinrichtung 21 so an dem Luftfahrzeug 3 arretiert werden, dass das Halteseil 7 entlastet wird.

Im Übrigen kann bezüglich des in den Figuren 5 bis 7 gezeigten Ausführungsbeispiels auf die Ausführungen zu dem in den Figuren 2 bis 4 gezeigten Ausführungsbeispiel verwiesen werden.

### Bezugszeichenliste

- 1 -: System
- 3 -: Luftfahrzeug
- 5 -: Landefläche
- 7 -: Halteseil
- 9 -: Trommel
- 11 -: Seilwinde
- 13 -: Steuereinrichtung
- 15 -: Befestigungseinrichtung
- 17 -: Kopplungseinrichtung
- 19 -: Notfall-Trenneinrichtung
- 19a -: Elektromagnet der Notfall Trenneinrichtung
- 19b -: Magnetisierbares Halteelement
- 21 -: Arretierungseinrichtung
- 21a -: Haken der Arretierungseinrichtung
- 21b -: Öse der Arretierungseinrichtung
- 23 -: Seilführung
- 25 -: Sensorik
- 26 -: Seilkraftsensor
- 27 -: Schalter
- 29 -: Akkumulator
- 31 -: Funkmodul
- 33 -: Optisches Signalmittel
- 35 -: Schnittstelle
- 37 -: Schwerpunkt des Luftfahrzeugs
- 39 -: Gierachse des Luftfahrzeugs
- 41 -: Sicherheitsschalter
- 43 -: Abzutrennender Teil
- 45 -: Wasserfahrzeug
- 47 -: Gehäuse
- 49 -: Griff
- 51 -: Verankerungspunkt

## Patentansprüche

1. System (1) zur Unterstützung eines Landevorgangs eines vertikallandefähigen Luftfahrzeugs (3) auf einer Landefläche (5) mit einem Halteseil (7) und mit einer durch einen Windenmotor angetriebenen Seilwinde (11), die zum Aufrollen und Abrollen des Halteseils (7) eingerichtet ist, und mit einer zum Steuern der Seilwinde (11) eingerichteten Steuereinrichtung (13) und mit einer Befestigungseinrichtung (15), mit der die Seilwinde (11) über das Halteseil (7) verbunden ist und die an dem Luftfahrzeug (3) befestigt werden kann, um die Seilwinde (11) über das Halteseil (7) mit dem Luftfahrzeug (3) zu verbinden, **wobei** das System (1) eine an der Seilwinde (11) angeordnete Kopplungseinrichtung (17) aufweist und dazu ausgebildet ist, von dem Luftfahrzeug (3) mitgeführt zu werden, und wobei
- die Steuereinrichtung (13) dazu eingerichtet ist, die Seilwinde (11) so zu steuern, dass zu Beginn des Landevorgangs durch Abrollen des Halteseils (7) die Seilwinde (11) von dem Luftfahrzeug (3) auf die Landefläche (5) abgelassen wird,
- die Kopplungseinrichtung (17) dazu eingerichtet ist, durch Herstellen einer lösbaren Verbindung zwischen der abgelassenen Seilwinde (11) und der Landefläche (5) einen angekoppelten Zustand des Luftfahrzeugs (3) herzustellen, in welchem das Luftfahrzeug (3) über das Halteseil (7) mit der Landefläche (5) verbunden ist, und
- die Steuereinrichtung (13) dazu eingerichtet ist, die Seilwinde (11) so zu steuern, dass während des Landevorgangs durch Aufrollen des Halteseils (7) in dem angekoppelten Zustand des Luftfahrzeugs (3) eine ununterbrochene Seilkraft auf das Luftfahrzeug (3) ausgeübt wird.

2. System (1) nach Anspruch 1, **dadurch gekennzeichnet, dass** das System (1) zur Unterstützung eines Startvorgangs des Luftfahrzeugs (3) von der Landefläche (5) ausgebildet ist und
- die Steuereinrichtung (13) dazu eingerichtet ist, die Seilwinde (11) so zu steuern, dass während des Startvorgangs im angekoppelten Zustand des Luftfahrzeugs (3) durch Abrollen des Halteseils (7) eine ununterbrochene Seilkraft auf das Luftfahrzeug (3) ausgeübt und zugleich ein Steigflug des Luftfahrzeugs (3) ermöglicht wird,
- die Kopplungseinrichtung (17) dazu eingerichtet ist, nach einem Erreichen einer Mindest-Flughöhe durch Lösen der lösbaren Verbindung zwischen der Seilwinde (11) und der Landefläche (5) einen entkoppelten Zustand des Luftfahrzeugs (3) herzustellen, in welchem das Luftfahrzeug (3) nicht mit der Landefläche (5) verbunden ist, und
- die Steuereinrichtung (13) dazu eingerichtet ist, die Seilwinde (11) so zu steuern, dass im entkoppelten Zustand des Luftfahrzeugs (3) durch Aufrollen des Halteseils (7) die Seilwinde (11) zu dem Luftfahrzeug (3) hinaufgezogen wird.

3. System (1) nach Anspruch 1 oder 2, **dadurch gekennzeichnet, dass** die Kopplungseinrichtung (17) einen einschaltbaren und abschaltbaren Elektromagneten aufweist, der dazu eingerichtet ist, im eingeschalteten Zustand eine Magnetkraft auf einen magnetisierbaren Teil der Landefläche (5) auszuüben, wobei die Kopplungseinrichtung (17) dazu eingerichtet ist, eine kraftschlüssige Verbindung zwischen der abgelassenen Seilwinde (11) und der Landefläche (5) durch Einschalten des Elektromagneten herzustellen und durch Abschalten des Elektromagneten zu lösen.

4. System (1) nach einem der vorhergehenden Ansprüche, **dadurch gekennzeichnet, dass** die Befestigungseinrichtung (15) eine Notfall-Trenneinrichtung (19) aufweist, die dazu eingerichtet ist, im Notfall manuell und/oder automatisch ausgelöst zu werden und bei ihrem Auslösen einen abzutrennenden Teil (43) des Systems (1), der mindestens das Halteseil (7) und die Seilwinde (11) umfasst, von dem Luftfahrzeug (3) zu trennen.

5. System (1) nach Anspruch 4, **dadurch gekennzeichnet, dass** die Notfall-Trenneinrichtung (19)
- einen durch Auslösen der Notfall-Trenneinrichtung (19) abschaltbaren Elektromagneten (19a) und ein magnetisierbares Halteelement (19b) umfasst, wobei das Halteelement (19b) im eingeschalteten Zustand des Elektromagneten (19a) von dem Elektromagneten (19a) gehalten und durch Abschalten des Elektromagneten (19a) von dem Elektromagneten (19a) gelöst werden kann, und/oder
- eine Sprengeinheit umfasst, die dazu eingerichtet ist, durch Auslösen der Notfall-Trenneinrichtung (19) gezündet zu werden und eine Verbindung zwischen dem abzutrennenden Teil (43) und dem Luftfahrzeug (3) zu sprengen.

6. System (1) nach einem der vorhergehenden Ansprüche, **dadurch gekennzeichnet, dass** die Befestigungseinrichtung (15) eine Arretierungseinrichtung (21) aufweist, die dazu eingerichtet ist, die Seilwinde (11) so an der Befestigungseinrichtung (15) zu arretieren, dass das Halteseil (7) entlastet wird.

7. System (1) nach einem der vorhergehenden Ansprüche, **dadurch gekennzeichnet, dass** die Seilwinde (11) eine Rutschkupplung aufweist, die dazu eingerichtet ist, die über das Halteseil (7) auf das Luftfahrzeug (3) ausgeübte Seilkraft auf eine maximal zulässige Seilkraft zu begrenzen.

8. System (1) nach Anspruch 7, **dadurch gekennzeichnet, dass** die Rutschkupplung als einstellbare Rutschkupplung ausgebildet ist, mit der ein maximal über die Rutschkupplung übertragbares Drehmoment eingestellt werden kann.

9. System (1) nach einem der vorhergehenden Ansprüche, **dadurch gekennzeichnet, dass** die Seilwinde (11) eine automatisch und/oder manuell aktivierbare Rücklaufsperre aufweist.

10. System (1) nach einem der vorhergehenden Ansprüche, **dadurch gekennzeichnet, dass** das System (1) eine Sensorik (25) aufweist, wobei die Sensorik (25) einen der nachfolgenden Sensoren, mehrere der nachfolgenden Sensoren und/oder sämtliche nachfolgenden Sensoren umfasst:
a) einen an der Befestigungseinrichtung (15) und/oder einen an der Seilwinde (11) angeordneten Seilkraftsensor (26) zur Erfassung eines Betrags und/oder einer Richtung und/oder eines Kraftvektors der über das Halteseil (7) auf das Luftfahrzeug (3) ausgeübten Seilkraft,
b) eine an der Seilwinde (11) angeordnete Seillängenmesseinheit zur Erfassung der abgerollten Seillänge zwischen dem Luftfahrzeug (3) und der Landefläche (5),
c) eine an der Seilwinde (11) angeordnete Winkelmesseinrichtung zur Erfassung des Seilwinkels des Halteseils (7) relativ zur Landefläche (5) und/oder eine an der Befestigungseinrichtung (15) angeordnete Winkelmesseinrichtung zur Erfassung des Seilwinkels des Halteseils (7) relativ zum Luftfahrzeug (3),
d) eine an der Befestigungseinrichtung (15) und/oder an der Seilwinde (11) angeordnete Kamera oder Multikamera,
e) einen an der Befestigungseinrichtung (15) und/oder an der Seilwinde (11) angeordneten Laserscanner,
f) einen an der Befestigungseinrichtung (15) und/oder an der Seilwinde (11) angeordneten Sonarabstandssensor,
g) einen an der Befestigungseinrichtung (15) und/oder an der Seilwinde (11) angeordneten Radarsensor,
h) einen an der Befestigungseinrichtung (15) und/oder an der Seilwinde (11) angeordneten Inertialsensor.

11. System (1) nach einem der vorhergehenden Ansprüche, **dadurch gekennzeichnet, dass** das System (1) einen an der Seilwinde (11) angeordneten und manuell betätigbaren Schalter (27) aufweist, der dazu eingerichtet ist, die Kopplungseinrichtung (17) so zu steuern, dass durch Betätigung des Schalters (27) die Verbindung zwischen der Seilwinde (11) und der Landefläche (5) hergestellt und/oder gelöst werden kann.

12. System (1) nach einem der vorhergehenden Ansprüche, **dadurch gekennzeichnet, dass** der Windenmotor der Seilwinde (11) als Elektromotor ausgebildet ist und das System (1) einen an der Seilwinde (11) angeordneten und mit dem Windenmotor elektrisch verbundenen Akkumulator (29) aufweist, der dazu eingerichtet ist, eine Versorgungsspannung zumindest für den Windenmotor bereitzustellen.

13. System (1) nach einem der vorhergehenden Ansprüche, **dadurch gekennzeichnet, dass** das System (1) ein an der Seilwinde (11) angeordnetes und mit der Steuereinrichtung (13) datentechnisch verbundenes Funkmodul (31) aufweist, das dazu eingerichtet ist, Daten über eine Funkverbindung zu senden und/oder zu empfangen, wobei
- die über die Funkverbindung empfangenen Daten Steuerdaten zur Steuerung der Seilwinde (11) umfassen und/oder
- die über die Funkverbindung gesendeten Daten von der Sensorik (25) erzeugte Sensordaten umfassen.

14. System (1) nach einem der vorhergehenden Ansprüche, **dadurch gekennzeichnet, dass** die Steuereinrichtung (13) zum Durchführen einer automatischen Seilwindenregelung eingerichtet ist, bei der die Steuereinrichtung (13) mindestens eine Stellgröße der Seilwinde (11) in Abhängigkeit von Sensordaten, die von mindestens einem Sensor der Sensorik (25) erzeugt werden, so einstellt, dass eine über das Halteseil (7) auf das Luftfahrzeug (3) ausgeübte Ist-Seilkraft auf eine Soll-Seilkraft geregelt wird.

15. System (1) nach Anspruch 14, **dadurch gekennzeichnet, dass** die mindestens eine Stellgröße der Seilwinde (11) eine von dem Windenmotor erzeugte Antriebsleistung und/oder ein von dem Windenmotor erzeugtes Antriebsdrehmoment und/oder eine Drehzahl des Windenmotors und/oder ein über die Rutschkupplung übertragbares Drehmoment umfasst.

16. System (1) nach einem der vorhergehenden Ansprüche, **dadurch gekennzeichnet, dass** das System (1) an der Seilwinde (11) angeordnete optische Signalmittel (33) aufweist, die dazu eingerichtet sind, einen Zustand des Systems (1) anzuzeigen.

17. System (1) nach einem der vorhergehenden Ansprüche, **dadurch gekennzeichnet, dass** die Befestigungseinrichtung (15) dazu ausgebildet ist, auf einer Gierachse (39) des Luftfahrzeugs (3) unter dem Schwerpunkt (37) des Luftfahrzeugs (3) angeordnet zu werden.

18. System (1) nach einem der vorhergehenden Ansprüche, **dadurch gekennzeichnet, dass** das Luftfahrzeug (3) ein unbemanntes Luftfahrzeug (3) ist.

19. System (1) nach einem der vorhergehenden Ansprüche, **dadurch gekennzeichnet, dass** das Luftfahrzeug (3) ein Hubschrauber oder Flugschrauber ist.

20. Vertikallandefähiges Luftfahrzeug (3) mit einem System (1) nach einem der vorhergehenden Ansprüche.

21. Verfahren zur Unterstützung eines Landevorgangs eines vertikallandefähigen Luftfahrzeugs (3) auf einer Landefläche (5) mittels eines Systems (1), das ein Halteseil (7) und eine zum Aufrollen und Abrollen des Halteseils (7) eingerichtete Seilwinde (11) und eine an der Seilwinde (11) angeordnete Kopplungseinrichtung (17) aufweist, wobei die Seilwinde (11) über das Halteseil (7) mit dem Luftfahrzeug (3) verbunden ist, mit den Schritten:
a) Ablassen der Seilwinde (11) von dem Luftfahrzeug (3) auf die Landefläche (5) durch Abrollen des Halteseils (7) von der Seilwinde (11),
b) Herstellen eines angekoppelten Zustands des Luftfahrzeugs (3) durch Herstellen einer lösbaren Verbindung zwischen der abgelassenen Seilwinde (11) und der Landefläche (5) mittels der Kopplungseinrichtung (17),
c) Aufrollen des Halteseils (7) mittels der Seilwinde (11) derart, dass während des Landevorgangs in dem angekoppelten Zustand des Luftfahrzeugs (3) eine ununterbrochene Seilkraft auf das Luftfahrzeug (3) ausgeübt wird.

22. Verfahren zur Unterstützung eines Startvorgangs eines vertikallandefähigen Luftfahrzeugs (3) auf einer Landefläche (5) mittels eines Systems (1), das ein Halteseil (7) und eine zum Aufrollen und Abrollen des Halteseils (7) eingerichtete Seilwinde (11) und eine an der Seilwinde (11) angeordnete Kopplungseinrichtung (17) aufweist, wobei die Seilwinde (11) über das Halteseil (7) mit dem Luftfahrzeug (3) verbunden ist, mit den Schritten:
a) Herstellen eines angekoppelten Zustands des Luftfahrzeugs (3) durch Herstellen einer lösbaren Verbindung zwischen der Seilwinde (11) und der Landefläche (5) mittels der Kopplungseinrichtung (17),
b) Abrollen des Halteseils (7) mittels der Seilwinde (11) derart, dass während des Startvorgangs in dem angekoppelten Zustand des Luftfahrzeugs (3) eine ununterbrochene Seilkraft auf das Luftfahrzeug (3) ausgeübt und zugleich ein Steigflug des Luftfahrzeugs (3) ermöglicht wird,
c) Herstellen eines entkoppelten Zustands, in welchem das Luftfahrzeug (3) nicht mit der Landefläche (5) verbunden ist, durch Lösen der lösbaren Verbindung zwischen der Seilwinde (11) und der Landefläche (5) mittels der Kopplungseinrichtung (17) nach einem Erreichen einer Mindest-Flughöhe,
d) Hinaufziehen der Seilwinde (11) zu dem Luftfahrzeug (3) durch Aufrollen des Halteseils (7) mittels der Seilwinde (11).

23. Verfahren nach Anspruch 21 oder 22, **dadurch gekennzeichnet, dass** sich die Landefläche (5) auf einem auf See befindlichen Wasserfahrzeug (45) oder auf einem auf See befindlichen Schwimmkörper oder auf einer auf See befindlichen Bohrplattform oder auf dem Dach eines Hochhauses befindet.

24. Verfahren nach einem der Ansprüche 21 bis 23, **dadurch gekennzeichnet, dass** das System (1) ein System nach einem der Ansprüche 1 bis 19 ist.

## Claims

1. System (1) for assisting an aircraft (3) capable of vertical landing in performing a landing operation on a landing area (5), comprising a retaining cable (7) and a cable winch (11), which is driven by a winch motor and is designed for rolling up and unrolling the retaining cable (7), and comprising a control device (13), designed for controlling the cable winch (11), and a fastening device (15), to which the cable winch (11) is connected by way of the retaining cable (7) and which can be fastened on the aircraft (3) in order to connect the cable winch (11) to the aircraft (3) by way of the retaining cable (7), wherein the system (1) has a coupling device (17), arranged on the cable winch (11), and is designed to be carried along by the aircraft (3), and wherein
- the control device (13) is designed to control the cable winch (11) in such a way that, at the beginning of the landing operation, the cable winch (11) is let out from the aircraft (3) onto the landing area (5) by unrolling the retaining cable (7),
- the coupling device (17) is designed to establish a coupled state of the aircraft (3), in which the aircraft (3) is connected to the landing area (5) by way of the retaining cable (7), by establishing a releasable connection between the let-out cable winch (11) and the landing area (5), and
- the control device (13) is designed to control the cable winch (11) in such a way that, during the landing operation, an uninterrupted cable force is exerted on the aircraft (3) by rolling up the retaining cable (7) in the coupled state of the aircraft (3).

2. System (1) according to Claim 1, **characterized in that** the system (1) is designed for assisting the aircraft (3) in performing a taking-off operation from the landing area (5) and
- the control device (13) is designed to control the cable winch (11) in such a way that, during the taking-off operation, an uninterrupted cable force is exerted on the aircraft (3) in the coupled state of the aircraft (3) by unrolling the retaining cable (7), and at the same time an ascending flight of the aircraft (3) is made possible,
- the coupling device (17) is designed to establish an uncoupled state of the aircraft (3), in which the aircraft (3) is not connected to the landing area (5), after reaching a minimum flying height by releasing the releasable connection between the cable winch (11) and the landing area (5), and
- the control device (13) is designed to control the cable winch (11) in such a way that, in the uncoupled state of the aircraft (3), the cable winch (11) is drawn up to the aircraft (3) by rolling up the retaining cable (7).

3. System (1) according to Claim 1 or 2, **characterized in that** the coupling device (17) has an activatable and deactivatable electromagnet, which is designed to exert a magnetic force on a magnetizable part of the landing area (5) in the activated state, wherein the coupling device (17) is designed to establish a non-positive connection between the let-out cable winch (11) and the landing area (5) by activating the electromagnet and to release it by deactivating the electromagnet.

4. System (1) according to one of the preceding claims, **characterized in that** the fastening device (15) has an emergency separating device (19), which is designed to be triggered manually and/or automatically in the event of an emergency and, when triggered, to separate from the aircraft (3) a part (43) of the system (1) to be detached, which comprises at least the retaining cable (7) and the cable winch (11) .

5. System (1) according to Claim 4, **characterized in that** the emergency separating device (19)
- comprises an electromagnet (19a), which can be deactivated by triggering the emergency separating device (19), and a magnetizable retaining element (19b), wherein the retaining element (19b) can be held by the electromagnet (19a) in the activated state of the electromagnet (19a) and can be released from the electromagnet (19a) by deactivating the electromagnet (19a), and/or
- comprises an explosive blasting unit, which is designed to be ignited by triggering the emergency separating device (19) and to blast a connection between the part (43) to be detached and the aircraft (3).

6. System (1) according to one of the preceding claims, **characterized in that** the fastening device (15) has an arresting device (21), which is designed to arrest the cable winch (11) on the fastening device (15) in such a way that the retaining cable (7) is relieved.

7. System (1) according to one of the preceding claims, **characterized in that** the cable winch (11) has a slip clutch, which is designed to limit the cable force exerted on the aircraft (3) by way of the retaining cable (7) to a maximum permissible cable force.

8. System (1) according to Claim 7, **characterized in that** the slip clutch is formed as an adjustable slip clutch, with which a maximum torque that can be transferred by way of the slip clutch can be set.

9. System (1) according to one of the preceding claims, **characterized in that** the cable winch (11) has an automatically and/or manually activatable return stop.

10. System (1) according to one of the preceding claims, **characterized in that** the system (1) has a sensor system (25), wherein the sensor system (25) comprises one of the following sensors, a number of the following sensors and/or all of the following sensors:
a) a cable force sensor (26), arranged on the fastening device (15) and/or on the cable winch (11), for sensing an amount and/or a direction and/or a force vector of the cable force exerted on the aircraft (3) by way of the retaining cable (7),
b) a cable length measuring unit, arranged on the cable winch (11), for sensing the unrolled cable length between the aircraft (3) and the landing area (5),
c) an angle measuring device, arranged on the cable winch (11), for sensing the cable angle of the retaining cable (7) in relation to the landing area (5) and/or an angle measuring unit, arranged on the fastening device (15), for sensing the cable angle of the retaining cable (7) in relation to the aircraft (3),
d) a camera or multi-camera, arranged on the fastening device (15) and/or on the cable winch (11),
e) a laser scanner, arranged on the fastening device (15) and/or on the cable winch (11),
f) a sonar distance sensor, arranged on the fastening device (15) and/or on the cable winch (11),
g) a radar sensor, arranged on the fastening device (15) and/or on the cable winch (11),
h) an inertial sensor, arranged on the fastening device (15) and/or on the cable winch (11).

11. System (1) according to one of the preceding claims, **characterized in that** the system (1) has a switch (27), which is arranged on the cable winch (11) and can be activated manually and which is designed to control the coupling device (17) in such a way that the connection between the cable winch (11) and the landing area (5) can be established and/or released by actuating the switch (27).

12. System (1) according to one of the preceding claims, **characterized in that** the winch motor of the cable winch (11) is designed as an electric motor and the system (1) has a rechargeable battery (29), which is arranged on the cable winch (11) and electrically connected to the winch motor and which is designed to provide a supply voltage at least for the winch motor.

13. System (1) according to one of the preceding claims, **characterized in that** the system (1) has a radio module (31), which is arranged on the cable winch (11) and connected in terms of data technology to the control device (13) and which is designed to transmit and/or receive data by way of a radio link, wherein
- the data received by way of the radio link comprise control data for controlling the cable winch (11) and/or
- the data transmitted by way of the radio link comprise sensor data generated by the sensor system (25) .

14. System (1) according to one of the preceding claims, **characterized in that** the control device (13) is designed for carrying out an automatic cable winch control, in which the control device (13) sets at least one manipulated variable of the cable winch (11) in dependence on sensor data that are generated by at least one sensor of the sensor system (25) in such a way that an actual cable force exerted on the aircraft (3) by way of the retaining cable (7) is controlled to a setpoint cable force.

15. System (1) according to Claim 14, **characterized in that** the at least one manipulated variable of the cable winch (11) comprises a drive power generated by the winch motor and/or a drive torque generated by the winch motor and/or a rotational speed of the winch motor and/or a torque that can be transferred by way of the slip clutch.

16. System (1) according to one of the preceding claims, **characterized in that** the system (1) has optical signalling means (33), which are arranged on the cable winch (11) and are designed to indicate a state of the system (1).

17. System (1) according to one of the preceding claims, **characterized in that** the fastening device (15) is designed to be arranged on a yaw axis (39) of the aircraft (3) under the centre of gravity (37) of the aircraft (3).

18. System (1) according to one of the preceding claims, **characterized in that** the aircraft (3) is an unmanned aircraft (3).

19. System (1) according to one of the preceding claims, **characterized in that** the aircraft (3) is a helicopter or a gyrocopter.

20. Aircraft (3) capable of vertical landing comprising a system (1) according to one of the preceding claims.

21. Method for assisting an aircraft (3) capable of vertical landing in performing a landing operation on a landing area (5) by means of a system (1), which has a retaining cable (7) and a cable winch (11), which is designed for rolling up and unrolling the retaining cable (7), and a coupling device (17), which is arranged on the cable winch (11), wherein the cable winch (11) is connected to the aircraft (3) by way of the retaining cable (7), comprising the steps of:
a) letting out the cable winch (11) from the aircraft (3) onto the landing area (5) by unrolling the retaining cable (7) from the cable winch (11),
b) establishing a coupled state of the aircraft (3) by establishing a releasable connection between the let-out cable winch (11) and the landing area (5) by means of the coupling device (17),
c) rolling up the retaining cable (7) by means of the cable winch (11) in such a way that an uninterrupted cable force is exerted on the aircraft (3) in the coupled state of the aircraft (3) during the landing operation.

22. Method for assisting an aircraft (3) capable of vertical landing in performing a taking-off operation on a landing area (5) by means of a system (1), which has a retaining cable (7) and a cable winch (11) designed for rolling up and unrolling the retaining cable (7), and a coupling device (17), arranged on the cable winch (11), wherein the cable winch (11) is connected to the aircraft (3) by way of the retaining cable (7), comprising the steps of:
a) establishing a coupled state of the aircraft (3) by establishing a releasable connection between the cable winch (11) and the landing area (5) by means of the coupling device (17),
b) unrolling the retaining cable (7) by means of the cable winch (11) in such a way that an uninterrupted cable force is exerted on the aircraft (3) in the coupled state of the aircraft (3) during the taking-off operation, and at the same time an ascending flight of the aircraft (3) is made possible,
c) establishing an uncoupled state, in which the aircraft (3) is not connected to the landing area (5), by releasing the releasable connection between the cable winch (11) and the landing area (5) by means of the coupling device (17) after reaching the minimum flying height,
d) drawing up the cable winch (11) to the aircraft (3) by rolling up the retaining cable (7) by means of the cable winch (11).

23. Method according to Claim 21 or 22, **characterized in that** the landing area (5) is located on a vessel (45) at sea or on a float at sea or on a drilling platform at sea or on the roof of a high-rise building.

24. Method according to one of Claims 21 to 23, **characterized in that** the system (1) is a system according to one of Claims 1 to 19.

## Revendications

1. Système (1) pour assister un processus d'atterrissage d'un aéronef (3), apte à l'atterrissage vertical, sur une surface d'atterrissage (5), comportant un câble de retenue (7) et un treuil (11) entraîné par un moteur de treuil et conçu pour enrouler et dérouler le câble de retenue (7), et comportant un dispositif de commande (13) conçu pour commander le treuil (11) et un dispositif de fixation (15), auquel le treuil (11) est relié par l'intermédiaire du câble de retenue (7) et qui peut être fixé à l'aéronef (3) pour relier le treuil (11) à l'aéronef (3) par l'intermédiaire du câble de retenue (7),
dans lequel
le système (1) présente un dispositif d'accouplement (17) disposé sur le treuil (11) et réalisé pour être emporté par l'aéronef (3), et
- le dispositif de commande (13) est conçu pour commander le treuil (11) de telle sorte que, au début du processus d'atterrissage, le treuil (11) est abaissé de l'aéronef (3) sur la surface d'atterrissage (5) par déroulement du câble de retenue (7),
- le dispositif d'accouplement (17) est conçu pour établir un état accouplé de l'aéronef (3) par établissement d'une liaison détachable entre le treuil abaissé (11) et la surface d'atterrissage (5), état dans lequel l'aéronef (3) est relié à la surface d'atterrissage (5) par l'intermédiaire du câble de retenue (7), et
- le dispositif de commande (13) est conçu pour commander le treuil (11) de telle sorte que, pendant le processus d'atterrissage, une force de câble ininterrompue est exercée sur l'aéronef (3) par enroulement du câble de retenue (7), dans l'état accouplé de l'aéronef (3).

2. Système (1) selon la revendication 1,
**caractérisé en ce que** le système (1) est réalisé pour assister un processus de décollage de l'aéronef (3) depuis la surface d'atterrissage (5), et
- le dispositif de commande (13) est conçu pour commander le treuil (11) de telle sorte que, pendant le processus de décollage, à l'état accouplé de l'aéronef (3), une force de câble ininterrompue est exercée sur l'aéronef (3) par déroulement du câble de retenue (7), tout en permettant à l'aéronef (3) de monter,
- le dispositif d'accouplement (17) est conçu pour établir un état désaccouplé de l'aéronef (3), dans lequel l'aéronef (3) n'est pas relié à la surface d'atterrissage (5), par libération de la liaison détachable entre le treuil (11) et la surface d'atterrissage (5) après qu'une altitude de vol minimale a été atteinte, et
- le dispositif de commande (13) est conçu pour commander le treuil (11) de telle sorte que dans l'état désaccouplé de l'aéronef (3), le treuil (11) est tiré en haut vers l'aéronef (3) par enroulement du câble de retenue (7).

3. Système (1) selon la revendication 1 ou 2,
**caractérisé en ce que** le dispositif d'accouplement (17) comporte un électroaimant qui peut être activé et désactivé et qui est conçu pour exercer une force magnétique sur une partie magnétisable de la surface d'atterrissage (5), dans l'état activé, et
le dispositif d'accouplement (17) est conçu pour établir une liaison en coopération de force entre le treuil abaissé (11) et la surface d'atterrissage (5) par activation de l'électroaimant, et pour la libérer par désactivation de l'électroaimant.

4. Système (1) selon l'une des revendications précédentes,
**caractérisé en ce que** le dispositif de fixation (15) comprend un dispositif de séparation d'urgence (19) qui est conçu pour être déclenché manuellement et/ou automatiquement en cas d'urgence et, lorsqu'il est déclenché, pour séparer une partie à séparer (43) du système (1), comprenant au moins le câble de retenue (7) et le treuil (11), vis-à-vis de l'aéronef (3).

5. Système (1) selon la revendication 4,
**caractérisé en ce que** le dispositif de séparation d'urgence (19)
- comprend un électroaimant (19a) qui peut être désactivé par déclenchement du dispositif de séparation d'urgence (19), et un élément de retenue magnétisable (19b), l'élément de retenue (19b) pouvant être retenu par l'électroaimant (19a) dans l'état activé de l'électroaimant (19a) et pouvant être détaché de l'électroaimant (19a) par désactivation de l'électroaimant (19a), et/ou
- une unité de détonation conçue pour être mise à feu par déclenchement du dispositif de séparation d'urgence (19) et pour faire exploser une liaison entre la partie à séparer (43) et l'aéronef (3).

6. Système (1) selon l'une des revendications précédentes,
**caractérisé en ce que** le dispositif de fixation (15) comprend un dispositif de verrouillage (21) conçu pour verrouiller le treuil (11) au dispositif de fixation (15) de telle sorte que le câble de retenue (7) est déchargé.

7. Système (1) selon l'une des revendications précédentes,
**caractérisé en ce que** le treuil (11) comporte un accouplement à glissement qui est conçu pour limiter la force de câble, exercée sur l'aéronef (3) par l'intermédiaire du câble de retenue (7), à une force de câble maximale admissible.

8. Système (1) selon la revendication 7,
**caractérisé en ce que** l'accouplement à glissement est conçu comme un accouplement à glissement réglable permettant de régler un couple maximal transmissible par l'accouplement à glissement.

9. Système (1) selon l'une des revendications précédentes,
**caractérisé en ce que** le treuil (11) comporte un blocage anti-retour activable automatiquement et/ou manuellement.

10. Système (1) selon l'une des revendications précédentes,
**caractérisé en ce que** le système (1) comprend un ensemble de capteurs (25), l'ensemble de capteurs (25) comprenant un des capteurs suivants, plusieurs des capteurs suivants et/ou tous les capteurs suivants :
a) un capteur de force de câble (26) disposé sur le dispositif de fixation (15) et/ou sur le treuil (11) pour détecter une grandeur et/ou une direction et/ou un vecteur de force de la force de câble exercée sur l'aéronef (3) par l'intermédiaire du câble de retenue (7),
b) une unité de mesure de longueur de câble disposée sur le treuil (11) pour détecter la longueur de câble déroulée entre l'aéronef (3) et la surface d'atterrissage (5),
c) un dispositif de mesure d'angle disposé sur le treuil (11) pour détecter l'angle du câble de retenue (7) par rapport à la surface d'atterrissage (5), et/ou un dispositif de mesure d'angle disposé sur le dispositif de fixation (15) pour détecter l'angle du câble de retenue (7) par rapport à l'aéronef (3),
d) une caméra ou multi-caméra disposée sur le dispositif de fixation (15) et/ou sur le treuil (11),
e) un scanner laser disposé sur le dispositif de fixation (15) et/ou sur le treuil (11),
f) un capteur de distance sonar disposé sur le dispositif de fixation (15) et/ou sur le treuil (11),
g) un capteur radar disposé sur le dispositif de fixation (15) et/ou sur le treuil (11),
h) un capteur inertiel disposé sur le dispositif de fixation (15) et/ou sur le treuil (11).

11. Système (1) selon l'une des revendications précédentes,
**caractérisé en ce que** le système (1) présente un commutateur (27) disposé sur le treuil (11) et pouvant être actionné manuellement, qui est conçu pour commander le dispositif d'accouplement (17) de telle sorte que la liaison entre le treuil (11) et la surface d'atterrissage (5) peut être établie et/ou libérée par actionnement du commutateur (27).

12. Système (1) selon l'une des revendications précédentes,
**caractérisé en ce que** le moteur du treuil (11) est réalisé sous forme de moteur électrique, et le système (1) comporte un accumulateur (29) disposé sur le treuil (11), connecté électriquement au moteur du treuil et conçu pour fournir une tension d'alimentation au moins pour le moteur du treuil.

13. Système (1) selon l'une des revendications précédentes,
**caractérisé en ce que** le système (1) présente un module radio (31) disposé sur le treuil (11), connecté au dispositif de commande (13) par voie informatique et conçu pour émettre et/ou recevoir des données par une connexion radio, et
- les données reçues via la connexion radio comprennent des données de commande pour commander le treuil (11) et/ou
- les données émises via la connexion radio comprennent des données de capteur générées par l'ensemble de capteurs (25).

14. Système (1) selon l'une des revendications précédentes,
**caractérisé en ce que** le dispositif de commande (13) est conçu pour effectuer une régulation automatique du treuil, lors de laquelle le dispositif de commande (13) règle au moins une grandeur de réglage du treuil (11) en fonction de données de capteur générées par au moins un capteur de l'ensemble de capteurs (25), de telle sorte qu'une force de câble réelle exercée sur l'aéronef (3) par l'intermédiaire du câble de retenue (7) est réglée à une force de câble de consigne.

15. Système (1) selon la revendication 14,
**caractérisé en ce que** ladite au moins une grandeur de réglage du treuil (11) inclut une puissance d'entraînement générée par le moteur du treuil et/ou un couple d'entraînement généré par le moteur du treuil et/ou une vitesse de rotation du moteur du treuil et/ou un couple transmissible par l'accouplement à glissement.

16. Système (1) selon l'une des revendications précédentes,
**caractérisé en ce que** le système (1) comprend des moyens de signalisation optique (33) disposés sur le treuil (11) et conçus pour afficher un état du système (1).

17. Système (1) selon l'une des revendications précédentes,
**caractérisé en ce que** le dispositif de fixation (15) est réalisé pour être disposé sur un axe de lacet (39) de l'aéronef (3) en dessous du centre de gravité (37) de l'aéronef (3).

18. Système (1) selon l'une des revendications précédentes,
**caractérisé en ce que** l'aéronef (3) est un aéronef sans pilote (3).

19. Système (1) selon l'une des revendications précédentes,
**caractérisé en ce que** l'aéronef (3) est un hélicoptère ou un girodyne.

20. Aéronef (3) apte à l'atterrissage vertical, comprenant un système (1) selon l'une des revendications précédentes.

21. Procédé pour assister un processus d'atterrissage d'un aéronef (3), apte à l'atterrissage vertical, sur une surface d'atterrissage (5) au moyen d'un système (1) qui comprend un câble de retenue (7) et un treuil (11) conçu pour enrouler et dérouler le câble de retenue (7) ainsi qu'un dispositif d'accouplement (17) disposé sur le treuil (11), le treuil (11) étant relié à l'aéronef (3) par l'intermédiaire du câble de retenue (7), comprenant les étapes consistant à :
a) abaisser le treuil (11) de l'aéronef (3) jusque sur la surface d'atterrissage (5) en déroulant le câble de retenue (7) du treuil (11),
b) établir un état accouplé de l'aéronef (3) en établissant une liaison détachable entre le treuil abaissé (11) et la surface d'atterrissage (5) au moyen du dispositif d'accouplement (17),
c) enrouler le câble de retenue (7) au moyen du treuil (11) de telle sorte que, pendant le processus d'atterrissage, à l'état accouplé de l'aéronef (3), une force de câble ininterrompue est exercée sur l'aéronef (3).

22. Procédé pour assister un processus de décollage d'un aéronef (3), apte à l'atterrissage vertical, sur une surface d'atterrissage (5) au moyen d'un système (1) qui comprend un câble de retenue (7) et un treuil (11) conçu pour enrouler et dérouler le câble de retenue (7) ainsi qu'un dispositif d'accouplement (17) disposé sur le treuil (11), le treuil (11) étant relié à l'aéronef (3) par l'intermédiaire du câble de retenue (7), comprenant les étapes consistant à :
a) établir un état accouplé de l'aéronef (3) en établissant une liaison détachable entre le treuil (11) et la surface d'atterrissage (5) au moyen du dispositif d'accouplement (17),
b) dérouler le câble de retenue (7) au moyen du treuil (11), de telle sorte que, pendant le processus de décollage, à l'état accouplé de l'aéronef (3), une force de câble ininterrompue est exercée sur l'aéronef (3) tout en permettant à l'aéronef (3) de monter,
c) établir un état désaccouplé dans lequel l'aéronef (3) n'est pas relié à la surface d'atterrissage (5), en libérant la liaison détachable entre le treuil (11) et la surface d'atterrissage (5) au moyen du dispositif d'accouplement (17) après qu'une altitude de vol minimale a été atteinte,
d) tirer en haut le treuil (11) vers l'aéronef (3) en enroulant le câble de retenue (7) au moyen du treuil (11).

23. Procédé selon la revendication 21 ou 22,
**caractérisé en ce que** la surface d'atterrissage (5) est située sur une embarcation en mer (45) ou sur un corps flottant en mer ou sur une plate-forme de forage en mer ou sur le toit d'un immeuble de grande hauteur.

24. Procédé selon l'une des revendications 21 à 23,
**caractérisé en ce que** le système (1) est un système selon l'une des revendications 1 à 19.
